# EUROPÄISCHE PATENTSCHRIFT

(11) **EP 2 285 554 B1**
(45) Veröffentlichungstag und Bekanntmachung des Hinweises auf die Patenterteilung: **17.10.2012**
(21) Anmeldenummer: 08736189.5
(22) Anmeldetag: 14.04.2008
(51) Int. Cl.: B29D 29/10, B29C 43/22, B29C 43/26, B29C 43/48, D07B 1/22, F16G 1/12, B66B 7/06

(54) **Verfahren und Vorrichtung zur Herstellung eines riemenartigen Tragmittels für eine Aufzugsanlage, riemenartiges Tragmittel und Aufzugsanlage mit einem solchen Tragmittel**
Process and device for producing a belt-like carrier means for an elevator system, belt-like carrier means and elevator system comprising such a carrier means
Procédé et dispositif de fabrication d'un moyen de support en forme de courroie pour installation d'ascenseur, moyen de support en forme de courroie et installation d'ascenseur dotée d'un tel moyen de support

(43) Veröffentlichungstag der Anmeldung: 23.02.2011
(73) Patentinhaber: Inventio AG, 6052 Hergiswil (CH)
(72) Erfinder: URBANI, Franco, I-10070 San Carlo Canavese (IT); ACH, Ernst, CH-6030 Ebikon (CH)
(74) Vertreter: Blöchle, Hans
(86) Internationale Anmeldenummer: PCT/EP2008/054488
(87) Internationale Veröffentlichungsnummer: WO 2009/127241

(56) Entgegenhaltungen:
- EP-A- 1 396 458
- EP-A- 1 886 797
- EP-A- 1 886 958
- EP-A- 1 886 960
- WO-A-2007/032763
- DE-A1- 3 527 640
- DE-A1- 10 222 015
- DE-A1-102004 030 722
- DE-A1-102005 044 988

## Beschreibung

### HINTERGRUND DER ERFINDUNG

### 1. Gebiet der Erfindung

Die vorliegende Erfindung betrifft ein Verfahren zur Herstellung eines riemenartigen Tragmittels für eine Aufzugsanlage, eine entsprechende Vorrichtung zur Herstellung eines riemenartigen Tragmittels, ein riemenartiges Tragmittel sowie eine Aufzugsanlage mit einem solchen riemenartigen Tragmittel.

### 2. Technischer Hintergrund

Eine Aufzugsanlage enthält üblicherweise wenigstens eine Aufzugskabine oder Plattform zum Befördern von Personen und/oder Gütern, ein Antriebssystem mit wenigstens einer Antriebsmaschine zum Bewegen der wenigstens einen Aufzugskabine oder Plattform entlang einer Fahrbahn und wenigstens ein Tragmittel zum Tragen der wenigstens einen Aufzugskabine oder Plattform und Übertragen der Kräfte von der wenigstens einen Antriebsmaschine auf die wenigstens eine Aufzugskabine oder Plattform. Als Tragmittel für mechanische Antriebe kommen derzeit seilartige Tragmittel (Drahtseile), kettenartige Tragmittel und in letzter Zeit vermehrt auch riemenartige Tragmittel (Tragriemen) in Frage (siche EP 1 396 458 A2).

Bei den riemenartigen Tragmitteln sind u.a. auch zweilagige Tragriemen bekannt, die eine erste Riemenlage und eine mit dieser verbundene zweite Riemenlage aufweisen. Üblicherweise sind in den Formkörper des Tragriemens dabei mehrere Zugträger, insbesondere seilartige Zugträger eingebettet.

Ein Verfahren zur Herstellung eines derartigen zweilagigen Tragriemens ist zum Beispiel in der DE 102 22 015 A1 offenbart. Bei diesem bekannten Verfahren werden in zwei integral hintereinandergeschalteten Fertigstationen zunächst ein die erste Riemenlage bildender Teilriemen und dann ein fertiger Tragriemen mit angeformter zweiter Riemenlage hergestellt, In der ersten Fertigungsstation werden gleichzeitig mehrere seilartige Zugträger zugeführt, die bis zur Hälfte in die erste Riemenlage eingebettet werden. Erste und zweite Riemenlage des Tragriemens werden jeweils mittels eines Extrusionsverfahrens gebildet.

Ferner beschreibt die WO 2007/032763 A1 ein Herstellungsverfahren für einen zweilagigen Tragriemen, bei dem in einer Fertigungsstation die erste Riemenlage und die zweite Riemenlage gebildet und gleichzeitig die Zugträger in der zweiten Riemenlage eingebettet werden.

Die WO 2007/033721 A1 zeigt ein zweistufiges Herstellungsverfahren für einen einlagigen Tragriemen. In der ersten Fertigungsstation wird der Formkörper des Tragriemens per Extrusionsverfahrens gebildet und gleichzeitig werden mehrere Zugträger darin eingebettet. In der unmittelbar daran anschliessenden zweiten Fertigungsstation wird dann die eine Aussenseite des Tragriemenkörpers mit einem Profil in Form von sich in Längsrichtung erstreckenden Keilrippen versehen.

Weitere Herstellungs verfahren für Riemen sind in der DE 3527640 A1 und der DE 10 2005 044 988 A1 of fenbart.

### ZUSAMMENFASSUNG DER ERFINDUNG

Es ist eine erste Aufgabe der vorliegenden Erfindung, ein verbessertes Herstellungsverfahren für ein riemenartiges Tragmittel für eine Aufzugsanlage zu schaffen.

Es ist eine zweite Aufgabe der vorliegenden Erfindung, eine verbesserte Herstellungsvorrichtung für ein riemenartiges Tragmittel für eine Aufzugsanlage zu schaffen.

Es ist eine weitere Aufgabe der vorliegenden Erfindung, ein verbessertes riemenartiges Tragmittel für eine Aufzugsanlage zu schaffen.

Gemäss einem ersten Aspekt der Erfindung ist ein Herstellungsverfahren für ein riemenartiges Tragmittel für eine Aufzugsanlage mit den Merkmalen des Anspruchs 1 vorgesehen. Vorteilhafte Weiterbildungen und Ausgestaltungen dieser Erfindung sind Gegenstand der abhängigen Ansprüche 2 bis 6.

Das Verfahren zur Herstellung eines riemenartigen Tragmittels für eine Aufzugsanlage enthält die Schritte des Platzierens wenigstens eines seilartigen Zugträgers; des Einbettens des wenigstens einen seilartigen Zugträgers in eine erste Riemenlage aus einem ersten plastifizierbaren Werkstoff derart, dass ein Teilriemen mit einer ersten Aussenfläche und einer eine Verbindungsebene bildenden Fläche entsteht, bei dem der wenigstens eine Zugträger teilweise aus der Verbindungsebene des Teilriemens vorsteht und der vorstehende Abschnitt des wenigstens einen Zugträgers zumindest teilweise mit dem ersten plastifizierbaren Werkstoff bedeckt ist; und des Anformen einer zweiten Riemenlage aus einem zweiten plastifizierbaren Werkstoff an der Verbindungsebene des Teilriemens und den vorstehenden Abschnitten des wenigstens einen Zugträgers derart, dass ein Tragmittel mit der ersten Aussenfläche auf der Seite der ersten Riemenlage und einer zweiten Aussenfläche auf der Seite der zweiten Riemenlage entsteht.

Die Zugträger werden bei diesem Verfahren möglichst vollständig in dem ersten plastifizierbaren Werkstoff der ersten Riemenlage eingebettet, sodass der zweite plastifizierbare Werkstoff für die zweite Riemenlage nicht mit den Zugträgern in Kontakt kommt. Da die Zugträger aus der Verbindungsebene zwischen den beiden Riemenlagen vorstehen, hat die im Einbettungsschritt aus dem ersten plastifizierbaren Werkstoff der ersten Riemenlage gebildete Verbindungsfläche eine grössere Oberfläche, sodass eine gute Verbindung zwischen der ersten und der zweiten Riemenlage erzielt werden kann.

In einer Ausgestaltung der Erfindung wird die Oberfläche des wenigstens einen Zugträgers im Einbettungsschritt zu wenigstens 80%, vorzugsweise wenigstens 90%, besonders bevorzugt wenigstens 95% mit dem ersten plastifizierbaren Werkstoff bedeckt. Vorzugsweise werden dabei auch die Freiräume innerhalb des wenigstens einen Zugträgers im Einbettungsschritt zumindest teilweise mit dem ersten plastifizierbaren Werkstoff gefüllt.

Für die erste Riemenlage und die zweite Riemenlage können wahlweise ein gleiche Werkstoffe, gleicher Werkstoffe mit unterschiedlichen Eigenschaften oder unterschiedliche Werkstoffe eingesetzt werden.

Unter dem Begriff "gleiche Werkstoffe" sind Werkstoffe der selben Kunststoff-Art (z. B. PUR, EPDM) zu verstehen. "Gleiche Werkstoffe mit unterschiedlichen Eigenschaften" sind somit Werkstoffe der selben Kunststoff-Art, die infolge von unterschiedlichen Produktionsparametern oder von unterschiedlichen Zusatzstoffen (z. B. Graphit, Wachs) unterschiedliche Eigenschaften aufweisen.

In einer weiteren Ausgestaltung der Erfindung wird die die Verbindungsebene bildende Fläche des Teilriemens vor dem Anformungsschritt der zweiten Riemenlage wenigstens teilweise mit einer Oberflächenstruktur versehen, wodurch die Oberfläche der Verbindungsebene vergrössert und damit eine bessere Verbindung mit der später anzuformenden zweiten Riemenlage erzeugt wird. Die Oberflächenstruktur an der Verbindungsfläche wird dabei vorzugsweise während des Einbettungsschritts ausgebildet.

In einer weiteren Ausgestaltung der Erfindung werden die erste Aussenfläche und/ oder die zweite Aussenfläche mit wenigstens einer sich in Längsrichtung des Tragmittels erstreckenden Rippe ausgebildet. Auch die Ausbildung der Rippen erfolgt vorzugsweise während des Einbettungsschritts bzw. während des Anformungsschritts.

In einer noch weiteren Ausgestaltung der Erfindung werden der Einbettungsschritt als ein Extrusionsverfahren mit Extrusion des ersten plastifizierbaren Werkstoffs und der Anformungsschritt als ein Extrusionsverfahren mit Extrusion des zweiten plastifizierbaren Werkstoffs ausgeführt.

In einer weiteren Ausgestaltung der Erfindung werden die erste Riemenlage und die zweite Riemenlage mit gleichen oder unterschiedlichen Verfahrensparametern (z.B. Temperatur, Druck, Rotationsgeschwindigkeit des Formrades, usw.) gebildet, die jeweils optimal an den ersten bzw. den zweiten plastifizierbaren Werkstoff angepasst sind.

In einer weiteren Ausgestaltung der Erfindung wird der wenigstens eine Zugträger während des Einbettungsschritts unter Vorspannung platziert.

Zur besseren Verbindung der Zugträger mit der ersten Riemenlage wird vorzugsweise der wenigstens eine Zugträger während des Einbettungsschritts erwärmt, und zur besseren Verbindung der ersten Riemenlage mit der zweiten Riemenlage wird vorzugsweise die Verbindungsfläche des Teilriemens während des Anformungsschritts erwärmt.

Gemäss einem zweiten Aspekt der Erfindung ist eine Herstellungsvorrichtung für ein riemenartiges Tragmittel für eine Aufzugsanlage mit den Merkmalen des Anspruchs 7 vorgesehen. Vorteilhafte Weiterbildungen und Ausgestaltungen dieser Erfindung sind Gegenstand der abhängigen Ansprüche 8 bis 10.

Die Vorrichtung zur Herstellung eines riemenartigen Tragmittels für eine Aufzugsanlage nach Anspruch 7 weist eine erste Fertigungsstation zum Bilden eines Teilriemens mit einer ersten Aussenfläche und einer eine Verbindungsebene bildenden Fläche und eine zweite Fertigungsstation zum Bilden des Tragriemens mit der ersten Aussenfläche und einer zweiten Aussenfläche auf. Die erste Fertigungsstation weist ein erstes Formrad, eine erste Führung, die einen Teilumfang des ersten Formrades umschlingt, eine Einrichtung zum Zuführen wenigstens eines seilartigen Zugträgers zum ersten Formrad und einen ersten Extruder zum Zuführen eines ersten plastifizierbaren Werkstoffs in einen zwischen dem ersten Formrad und der ersten Führung gebildeten Formhohlraum auf. Die zweite Fertigungsstation weist ein zweites Formrad, eine zweite Führung, die einen Teilumfang des zweiten Formrades umschlingt, eine Einrichtung zum Zuführen des in der ersten Fertigungsstation hergestellten Teilriemens zum zweiten Formrad und einen zweiten Extruder zum Zuführen eines zweiten plastifizierbaren Werkstoffs in einen zwischen dem zweiten Formrad und der zweiten Führung gebildeten Formhohlraum auf. Erfindungsgemäss ist die Umfangsfläche des ersten Formrades der ersten Fertigungsstation mit wenigstens einer sich in Umfangsrichtung des ersten Formrades erstreckenden Längsnut ausgebildet, in welcher der wenigstens eine zugeführte Zugträger geführt wird und welche derart dimensioniert ist, dass bei dem in der ersten Fertigungsstation hergestellten Teilriemen der wenigstens eine Zugträger teilweise aus der Verbindungsebene vorsteht und der vorstehende Abschnitt des wenigstens einen Zugträgers zumindest teilweise mit dem ersten plastifizierbaren Werkstoff bedeckt ist.

Mit dieser Vorrichtung können die gleichen Wirkungen und Vorteile wie mit dem oben beschriebenen Herstellungsverfahren erzielt werden.

In einer Ausgestaltung der Erfindung ist eine Breite der Längsnuten der Umfangsfläche des ersten Formrades kleiner gewählt als ein Durchmesser der Zugträger, wobei die Breite der Längsnuten vorzugsweise in einem Bereich von etwa 70% bis 95%, besonders bevorzugt in einem Bereich von etwa 75% bis 90% des Durchmessers der Zugträger liegt. Ferner liegt eine Tiefe der Längsnuten der Umfangsfläche des ersten Formrades vorzugsweise in einem Bereich von etwa 25% bis 50%, besonders bevorzugt in einem Bereich von etwa 30% bis 40% des Durchmessers der Zugträger.

In einer weiteren Ausgestaltung der Erfindung weist die erste Fertigungsstation ferner eine Vorrichtung zum Zuführen des wenigstens einen Zugträgers zum ersten Formrad unter Vorspannung und eine erste Heizvorrichtung zum Erwärmen des wenigstens einen Zugträgers vor seiner Zufuhr zum ersten Formrad auf.

In einer noch weiteren Ausgestaltung der Erfindung ist die erste Führung der ersten Fertigungsstation an ihrer dem ersten Formrad zugewandten Seite so ausgestaltet, dass sie der ersten Aussenfläche des Teilriemens bzw. des Tragriemens ein Profil gibt, das beispielsweise die Form von Keilrippen hat.

In einer noch weiteren Ausgestaltung der Erfindung ist das erste Formrad an seiner Umfangsfläche im Bereich zwischen den Längsnuten mit einer Struktur versehen, um der die Verbindungsebene bildenden Fläche des Teilriemens eine Oberflächenstruktur zu geben. Diese Oberflächenstruktur bewirkt eine Vergrösserung der Oberfläche der genannten Verbindungsebene, wodurch eine bessere Verbindung zwischen der ersten und der zweiten Riemenlage des Tragriemens erreicht wird.

In einer weiteren Ausgestaltung der Erfindung weist die zweite Fertigungsstation ferner eine zweite Heizvorrichtung zum Erwärmen des Teilriemens vor seiner Zufuhr zum zweiten Formrad auf, und die zweite Führung der zweiten Fertigungsstation ist an ihrer dem zweiten Formrad zugewandten Seite so ausgestaltet, dass sie der ersten Aussenfläche des Teilriemens bzw. des Tragriemens ein Profil gibt, das beispielsweise die Form von Keilrippen hat.

Gemäss einem weiteren Aspekt der Erfindung ist ein riemenartiges Tragmittel für eine Aufzugsanlage mit den Merkmalen des Anspruchs 11 vorgesehen. Vorteilhafte Weiterbildungen und Ausgestaltungen dieser Erfindung sind Gegenstand der abhängigen Ansprüche 12 bis 16.

Unter dem Begriff "Riemenartiges Tragmittel" sind alle Arten von flexiblen Zugmitteln zu verstehen, die keinen kreisförmigen Querschnitt aufweisen, ausreichend flexibel sind, um über Antriebs- oder Umlenkscheiben geführt werden zu können und dabei Kräfte zwischen Komponenten einer Aufzugsanlage übertragen können.

Das riemenartige Tragmittel für eine Aufzugsanlage (nachfolgend häufig einfach mit "Tragriemen" bezeichnet) umfasst eine erste Riemenlage aus einem ersten plastifizierbaren Werkstoff mit einer ersten Aussenfläche und einer eine Verbindungsebene bildenden Fläche, wenigstens einen seilartigen Zugträger, der so in die erste Riemenlage eingebettet ist, dass er teilweise aus der Verbindungsebene der ersten Riemenlage vorsteht und der vorstehende Abschnitt des wenigstens einen Zugträgers zumindest teilweise mit dem ersten plastifizierbaren Werkstoff bedeckt ist, und eine zweite Riemenlage aus einem zweiten plastifizierbaren Werkstoff, der an der Verbindungsebene der ersten Riemenlage und den vorstehenden Abschnitten des wenigstens einen Zugträgers angeformt ist und eine zweite Aussenfläche des Tragriemens bildet.

Mit dem so aufgebauten Tragriemen lassen sich die gleichen Wirkungen und Vorteile erzielen, wie sie oben in Zusammenhang mit dem Herstellungsverfahren genannt worden sind.

In einer Ausgestaltung der Erfindung ist die Oberfläche des wenigstens einen Zugträgers zu wenigstens 80%, vorzugsweise wenigstens 90%, besonders bevorzugt wenigstens 95% mit dem ersten plastifizierbaren Werkstoff bedeckt und die Freiräume innerhalb des wenigstens einen Zugträgers sind zumindest teilweise mit dem ersten plastifizierbaren Werkstoff gefüllt.

Die erste Riemenlage und die zweite Riemenlage des Tragriemens können wahlweise aus dem gleichen Werkstoff, einem gleichen Werkstoff mit unterschiedlichen Eigenschaften oder aus unterschiedlichen Werkstoffen gebildet sein.

In einer Ausgestaltung der Erfindung ist die erste Aussenfläche der ersten Riemenlage mit wenigstens einer sich in Längsrichtung des Tragmittels erstreckenden Rippe ausgebildet, welche vorzugsweise in der Form einer Keilrippe ausgebildet ist, einen Flankenwinkel zwischen 60° und 120°, vorzugsweise zwischen 80° und 100°, aufweist und/oder mit einer abgeflachten Spitze ausgebildet ist.

In einer weiteren Ausgestaltung der Erfindung ist die zweite Aussenfläche der zweiten Riemenlage mit wenigstens einer sich in Längsrichtung des Tragmittels erstreckenden Rippe ausgebildet, welche vorzugsweise in der Form einer Keilrippe ausgebildet ist, einen Flankenwinkel zwischen 60° und 100°, vorzugsweise zwischen 80° und 100°, aufweist und/oder mit einer abgeflacht Spitze ausgebildet ist.

In einer noch weiteren Ausgestaltung der Erfindung ist das Verhältnis der Gesamthöhe des Tragriemens zur Gesamtbreite des Tragriemens grösser als 1. Alternativ kann dieses Verhältnis aber auch ungefähr 1 betragen oder kleiner als 1 sein. Gemäss einem weiteren Aspekt der Erfindung ist eine Aufzugsanlage mit den Merkmalen des Anspruchs 17 vorgesehen

Die Aufzugsanlage der Erfindung hat wenigstens eine Aufzugskabine oder Plattform zum Befördern von Personen und/oder Gütern, ein Antriebssystem mit wenigstens einer Antriebsmaschine zum Bewegen der wenigstens einen Aufzugskabine oder Plattform entlang einer Fahrbahn und wenigstens ein Tragmittel zum Tragen der wenigstens einen Aufzugskabine oder Plattform und zum Übertragen der Kräfte von der wenigstens einen Antriebsmaschine auf die wenigstens eine Aufzugskabine oder Plattform.

Das wenigstens eine Tragmittel ist vorzugsweise ein riemenartiges Tragmittel gemäss vorliegender Erfindung bzw. ein nach dem Herstellungsverfahren der Erfindung gefertigtes riemenartiges Tragmittel.

Die Aufzugsanlage umfasst ein Antriebssystem, vorzugsweise in Form eines Treibscheibenantriebs oder eines Trommelantriebs.

### KURZBESCHREIBUNG DER ZEICHNUNGEN

Obige sowie weitere Merkmale und Vorteile der Erfindung werden aus der nachfolgenden Beschreibung bevorzugter, nicht-einschränkender Ausführungsbeispiele unter Bezug auf die beiliegenden Zeichnungen besser verständlich.

Es zeigen:
- Fig. 1: eine schematische Darstellung des Aufbaus einer Aufzugsanlage gemäss der Erfindung mit einem Trommelantrieb;
- Fig. 2A und 2B: schematische Darstellungen des Aufbaus einer Aufzugsanlage gemäss der Erfindung mit einem Treibscheibenantrieb, wobei sich eine Aufzugskabine in einer unteren Endpositionen bzw. in einer oberen Endposition in einem Aufzugsschacht befindet;
- Fig. 3: eine schematische Perspektivansicht eines Grundaufbaus eines riemenartigen Tragmittels gemäss der vorliegenden Erfindung;
- Fig. 4A und 4B: schematische Darstellungen des Aufbaus und der Funktionsweise einer ersten Station zur Herstellung des in Fig. 3 veranschaulichten Tragmittels;
- Fig. 5: eine schematische Darstellung zum Erläutern der Funktionsweise der in Fig. 4A und 4B veranschaulichten ersten Station;
- Fig. 6: eine schematische Darstellung eines in der ersten Station von Fig. 4A und 4B hergestellten Teilriemens gemäss einer speziellen Ausführungsform;
- Fig. 7A und 7B: schematische Darstellungen des Aufbaus und der Funktionsweise einer zweiten Station zur Herstellung des in Fig. 3 veranschaulichten Tragmittels;
- Fig. 8: eine schematische Schnittansicht eines riemenartigen Tragmittels gemäss einem ersten Ausführungsbeispiel der Erfindung, das gemäss dem Verfahren der Erfindung hergestellt ist;
- Fig. 9: eine schematische Schnittansicht eines riemenartigen Tragmittels gemäss einem zweiten Ausführungsbeispiel der Erfindung, das gemäss dem Verfahren der Erfindung hergestellt ist;
- Fig. 10: eine schematische Schnittansicht eines riemenartigen Tragmittels gemäss einem dritten Ausführungsbeispiel der Erfindung, das gemäss dem Verfahren der Erfindung hergestellt ist; und
- Fig. 11A und 11B: schematische Schnittansichten von zwei Varianten eines riemenartigen Tragmittels, das gemäss dem erfindungsgemässen Verfahren hergestellt ist.

### DETAILLIERTE BESCHREIBUNG DER DERZEIT BEVORZUGTEN AUSFÜHRUNGSBEISPIELE

### 1. Aufzugsanlage

Eine Aufzugsanlage gemäss der vorliegenden Erfindung kann als Personenaufzug zum Befördern von Personen und gegebenenfalls auch Gütern oder als Güteraufzug zum ausschliesslichen Befördern von Gütern ausgeführt sein. Die nachfolgende Beschreibung der einzelnen Aufzugskomponenten erfolgt jeweils anhand einer Ausgestaltung als Personenaufzug; die erfindungsgemässe Lehre ist aber grundsätzlich auch auf Güteraufzüge übertragbar.

Die erfindungsgemässe Aufzugsanlage weist wenigstens eine Aufzugskabine oder alternativ eine oder mehrere bewegliche Plattformen auf, die zwischen festen Zugangsstellen (insbesondere zwischen Stockwerken eines Gebäudes) in vertikaler Richtung bewegbar sind und entlang ihrer Fahrbahnen zumindest abschnittsweise geführt sind. Die Aufzugskabine ist mit Hilfe eines Antriebssystems bewegbar, wobei das Antriebssystem eine oder mehrere gegebenenfalls voneinander unabhängig betreibbare Antriebsmaschinen aufweist. Mit Hilfe des Antriebssystems ist die Aufzugskabine optional auch in horizontaler Richtung oder entlang einer gekrümmten Kurvenbahn bewegbar ausgeführt.

Bei den Antriebssystemen kann man grundsätzlich zwischen einem mechanischen Antriebssystem unter Verwendung einer Treibscheibe oder einer Trommel, einem hydraulischen Antriebssystem und einem so genannten Zahnstangenantrieb unterscheiden. Die vorliegende Erfindung betrifft insbesondere Aufzugsanlagen mit einem Treibscheibenantrieb oder Trommelantriebe als Antriebssystem.

Der konkrete Aufbau des erfindungsgemässen Antriebssystems wird weiter unten detailliert beschrieben.

### 1.1 Aufzugskabine

Die Aufzugskabine stellt eine der Hauptbaugruppen des erfindungsgemässen Aufzugssystems dar und dient der Aufnahme von Personen und Gütern. Aufzugskabinen werden im Allgemeinen mit rechteckiger oder quadratischer Grundfläche hergestellt, es sind aber auch andere Kabinenformen zum Beispiel mit runder Grundfläche und dergleichen möglich. Es ist mindestens ein Zugang zur Aufzugskabine vorgesehen. In den meisten Fällen ist der Zugang zur Aufzugskabine mit einer Kabinentür verschliessbar, ohne dass die vorliegende Erfindung auf diese Ausgestaltung einer Aufzugskabine beschränkt sein soll.

Zum Tragen und Antreiben der Aufzugskabine dient mindestens ein Tragmittel, das in einem Ausführungsbeispiel mittelbar oder unmittelbar an der Aufzugskabine befestigt ist. In modifizierten Ausführungsbeispielen ist das Tragmittel über unterhalb oder oberhalb der Aufzugskabine angebrachte Umlenkscheiben geführt.

### 1.2 Gegengewicht

Insbesondere bei Aufzugsanlagen mit einem Treibscheibenantrieb wird zur Reduzierung der benötigten Antriebsenergie ein vorzugsweise an Gegengewichtsführungsschienen geführtes Gegengewicht benutzt. Das Gegengewicht dient dabei auch dazu, das Tragmittel zu spannen, um zwischen einer Treibscheibe und dem Tragmittel die Übertragung einer Traktionskraft zu ermöglichen.

Das Gewicht des Gegengewichts ist üblicherweise höchstens gleich der Summe aus dem Gewicht der Aufzugskabine und der Hälfte der maximalen Nutzlast der Aufzugsanlage. Der volle Ausgleich, bei dem die Antriebsenergie hauptsächlich zur Überwindung der Reibungswiderstände im System aufgebracht wird, besteht also bei Belastung der Aufzugskabine mit halber Nutzlast.

### 1.3 Aufzugsschacht

Erfindungsgemäss ist die Kabine in einem Aufzugsschacht eines Gebäudes angeordnet, wobei es sich von selbst versteht, dass das vorliegend beschriebene Aufzugssystem auch auf grösseren mobilen Einheiten wie Schiffen oder in Bergwerken einsetzbar ist.

Der Aufzugsschacht ist ein an mehreren Seiten durch vertikale Wände begrenzter Raum, in dem sich die Fahrbahn der Aufzugskabine befindet. In bevorzugter Weise befindet sich in dem Aufzugsschacht neben der Fahrbahn der Aufzugskabine auch die Fahrbahn des Gegengewichts.

Zum Aufzugsschacht gehörig sind auch ein Schachtkopf im oberen Endbereich und eine Schachtgrube im unteren Endbereich des Aufzugsschachts. In der Schachtgrube können zum Beispiel Puffer für die Aufzugskabine und das Gegengewicht angeordnet sein.

### 1.4 Führungsschienen

Erfindungsgemäss sind an den Seitenwänden des Aufzugsschachts Führungsschienen für die Aufzugskabine und das Gegengewicht angeordnet, welche die Aufzugskabine bzw. das Gegengewicht entlang ihrer Fahrbahnen im Aufzugsschacht sicher und exakt führen. Gleichzeitig dienen die Führungsschienen als Elemente, an welchen Fangvorrichtungen der Aufzugkabine und/oder des Gegengewichts beim Fangvorgang angreifen.

Vorzugsweise ist die Aufzugskabine auf zwei gegeüberliegenden Seiten jeweils oben und unten mit einer Führung, beispielsweise in Form von Führungsgleitschuhen und/oder Rollenführungsschuhen, ausgestattet, mit denen sie an den Führungsschienen im Aufzugsschacht geführt wird.

### 1.5 Fangvorrichtung

Eine der wichtigsten und ältesten Forderungen für den Betrieb von Aufzugsanlagen (insbesondere von betretbaren Personenaufzügen) ist die Sicherung der Aufzugskabine gegen Absturz.

Im Allgemeinen werden heute zwei Arten von Fangvorrichtungen verwendet: die Sperrfangvorrichtung und die Bremsfangvorrichtung. Die Sperrfangvorrichtung ist nur bis zu einer bestimmten Betriebsgeschwindigkeit zugelassen, während die Bremsfangvorrichtung für Aufzugsanlagen mit höheren Betriebsgeschwindigkeiten geeignet ist.

Beide Arten der Fangvorrichtung sind fest mit der Aufzugskabine bzw. dem Gegengewicht verbunden. Sie bestehen zumeist aus zwei Fanggehäusen mit den Fangorganen (und zwar je ein Fanggehäuse für jede der beiden gegenüberliegenden Führungsschienen), den Übertragungsorganen und den Anschlussorganen für die Auslösung der Fangvorrichtung. Beide Fangvorrichtungsarten werden durch einen Geschwindigkeitsbegrenzer / Regler ausgelöst, wenn eine vorbestimmte Auslösegeschwindigkeit überschritten wird. Als Geschwindigkeitsbegrenzer wird zwischen zwei Bauarten unterschieden: den Pendelreglern und den Fliehkraftreglern.

Die Elementarfunktion beider Arten ist oft die gleiche: beim Fangvorgang werden Keile, Rollen oder dergleichen in den sich nach oben verjüngenden Keilkammern der Fanggehäuse nach oben bewegt. Dadurch wird die Aufzugskabine an den Führungsschienen des Aufzugsschachts festgeklemmt bzw. bis zum Stillstand abgebremst. Gleichzeitig wird der Fangschalter zum Unterbrechen der Steuerung und damit zum Stillsetzen des Antriebssystems geöffnet.

### 1.6 Fahrschachttüren und deren Sicherheitseinrichtungen

Die Fahrschachttüren können je nach Art und Zweckbestimmung einer Aufzugsanlage ausgeführt sein. Die verschiedenen Ausführungsarten von Fahrschachttüren lassen sich unterteilen in Flügeltüren (bzw. ein- und zweiflügelige Drehtüren), Faltflügeltüren, waagerecht bewegte Schiebetüren, senkrecht bewegte Schiebetüren und Sonderkonstruktionen.

Türverschlüsse als wichtige Sicherheitseinrichtungen von Aufzugsanlagen lassen sich einerseits nach der Art der zu sperrenden Türen und andererseits nach der Art des verwendeten Sperrmittels einteilen. Für Drehtüren sind zum Beispiel Türverschlüsse mit Schubriegeln oder mit Klappentürsperren bekannt, für waagerecht bewegte Schiebetüren und für senkrecht bewegte Schiebetüren gibt es zum Beispiel Türverschlüsse mit Schubriegeln oder mit Hakenriegeln.

Die Fahrschachttüren und ihre Türverschlüsse sind dabei zumeist mit der Aufzugskabine bzw. ihren Kabinentüren gekoppelt. Beispielsweise darf ein Abfahren der Aufzugskabine erst nach Schliessen beider Türen und nach vollständiger Verriegelung der jeweiligen Fahrschachttür möglich sein.

### 1.7 Puffer

Insbesondere bei Aufzugsanlagen mit höheren Betriebsgeschwindigkeiten sind im Bereich der Schachtgrube mehrere Puffer vorgesehen, um zum Beispiel bei einem Versagen der Bremse des Antriebssystems oder beim Durchfahren der Betriebsendstellungen der Aufzugskabine ein allzu hartes Aufsetzen der Aufzugskabine oder ggf. des Gegengewichts auf den Boden der Schachtgrube zu verhindern.

Die Puffer können entweder als Federn (energiespeichernde Puffer) oder hydraulisch wirkend (energieabsorbierende Puffer) ausgeführt werden.

### 2. Antriebssystem

Es wird nun der Aufbau des bereits oben erwähnten Antriebssystems näher erläutert.

### 2.1 Trommelantrieb

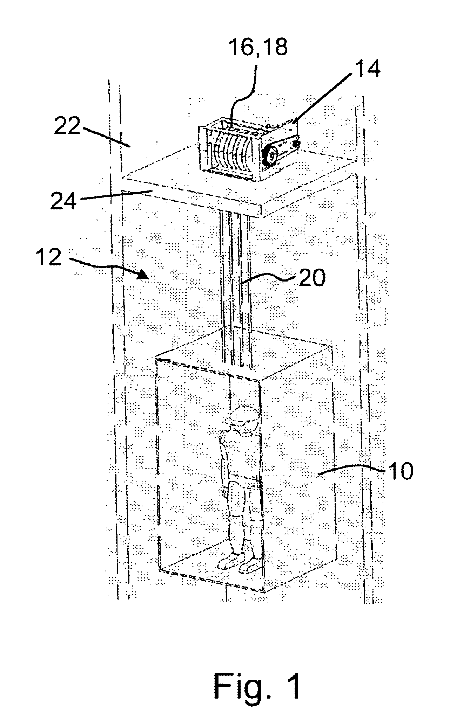

Bezug nehmend auf Fig. 1 wird zunächst der Aufbau einer Aufzugsanlage mit einem Trommelantrieb genauer beschrieben.

Die Aufzugsanlage umfasst eine Aufzugskabine 10, die in einem Aufzugsschacht 12 aufwärts und abwärts bewegbar ist. Dabei wird die Aufzugskabine 10 entlang von vertikalen Führungsschienen (nicht dargestellt) zum Beispiel an den Wänden des Aufzugsschachts 12 geführt. Zum Bewegen der Aufzugskabine 10 ist eine Antriebsmaschine 14 vorgesehen, die insbesondere eine von einem Motor 16 angetriebene Trommel 18 umfasst, wobei Motor und Trommel vorzugsweise als integrale Einheit konstruiert sind. Eine einen Teil der Aufzugsteuerung bildende Antriebssteuerung (nicht dargestellt) steuert die Aktionen des Trommelantriebs und damit die Bewegung der Aufzugskabine.

Zum Tragen der Aufzugskabine 10 und zum Übertragen der Kräfte von der Trommel 18 der Antriebsmaschine 14 auf die Aufzugskabine 10 ist wenigstens ein Tragmittel 20 vorhanden. Im Allgemeinen sind mehrere parallel verlaufende Tragmittel 20 vorhanden, wie in Fig. 1 angedeutet. Das eine Ende des / der Tragmittel(s) 20 ist an der Aufzugskabine 10 befestigt, und das andere Ende des / der Tragmittel(s) 20 ist auf der Trommel 18 der Antriebsmaschine 14 fixiert. Die Bewegung der Aufzugskabine 10 erfolgt durch Aufwickeln des / der Tragmittel(s) 20 auf die Trommel 18 der Antriebsmaschine 14 bzw. durch Abwickeln des / der Tragmittel(s) 20 von der Trommel, was durch Drehen dieser Trommel 18 bewirkt wird.

Während in der Ausführungsform gemäss Fig. 1 kein Gegengewicht vorgesehen ist, kann ein solches auch bei einem Trommelantrieb existieren. Ein Gegengewicht wird dann über ein zweites Tragmittel mit der Trommel 18 der Antriebsmaschine 14 gekoppelt, um die erforderlichen Antriebskräfte des Motors 16 zu reduzieren.

Die Antriebsmaschine 14 ist in Fig. 1 in einem Maschinenraum 22 oberhalb des Aufzugsschachts 12 angeordnet, wobei der Maschinenraum 22 vom Aufzugsschacht 12 durch eine Schachtdecke 24, einen Querträger, eine Brücke oder dergleichen getrennt ist. Es sind aber ebenso maschinenraumlose Aufzugsanlagen möglich, und die Antriebsmaschine 14 kann alternativ auch neben dem Aufzugsschacht 12 angeordnet werden. Beispielsweise kann die Antriebsmaschine 14 auch auf den Führungsschienen für die Aufzugskabine 10 und/oder das Gegengewicht befestigt sein.

### 2.2 Treibscheibenantrieb

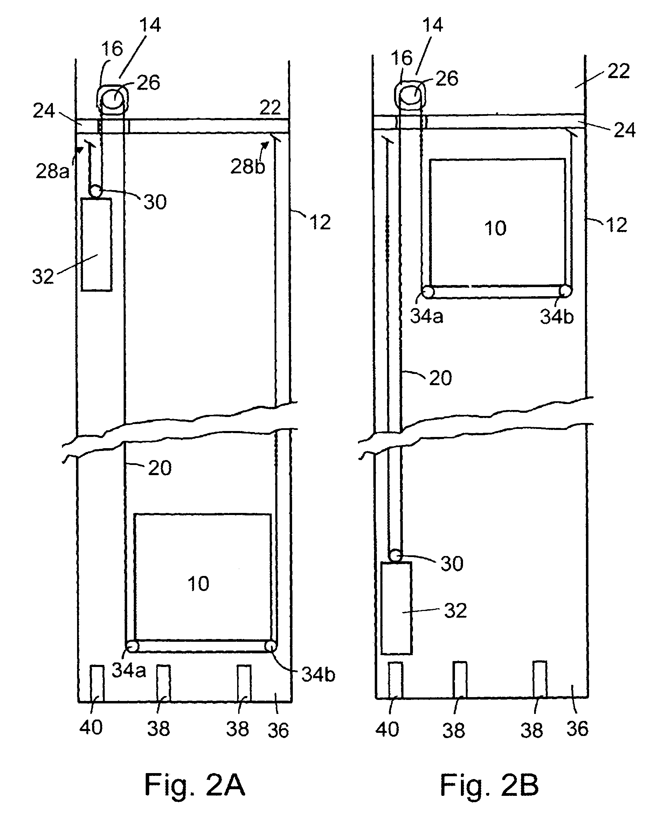

Der Aufbau einer Aufzugsanlage mit einem Treibscheibenantrieb wird nachfolgend mit Bezug auf Fig. 2A und 2B näher erläutert. Dabei Komponenten, die gleichwirkend beim Treibscheibenantrieb wie beim vorstehend beschriebenen Trommelantrieb vorhanden sind, mit den gleichen Bezugsziffern bezeichnet.

Die Aufzugsanlage umfasst eine Aufzugskabine 10, die in einem Aufzugsschacht 12 aufwärts und abwärts bewegbar ist. Dabei wird die Aufzugskabine 10 entlang von vertikalen Führungsschienen (nicht dargestellt) zum Beispiel an den Wänden des Aufzugsschachts 12 geführt. Zum Bewegen der Aufzugskabine 10 ist eine Antriebsmaschine 14 vorgesehen, die insbesondere eine von einem Motor 16 angetriebene Treibscheibe 26 aufweist. Zum Tragen der Aufzugskabine 10 und zum Übertragen der Antriebskräfte von der Antriebsmaschine 14 auf die Aufzugskabine 10 ist wenigstens ein Tragmittel 20 vorgesehen, dessen beide freien Enden im oder am Aufzugsschacht 12 an Befestigungspunkten 28a und 28b befestigt sind. Eine einen Teil der Aufzugsteuerung bildende Antriebssteuerung (nicht dargestellt) steuert die Aktionen des Treibscheibenantriebs und damit die Bewegung der Aufzugskabine.

Von dem ersten Befestigungspunkt 28a (links in Fig. 2A und 2B) verläuft das Tragmittel 20 zunächst entlang des Aufzugsschachts 12 nach unten, umschlingt eine Gegengewichtstragscheibe 30, an der ein Gegengewicht 32 hängt, und verläuft wieder nach oben in Richtung zur Treibscheibe 26 der Antriebsmaschine 14. Nach Umschlingung der Treibscheibe 26 erstreckt sich das Tragmittel 20 wieder nach unten und unterschlingt die Aufzugskabine 10, die zu diesem Zweck an ihrer Unterseite zwei Kabinentragscheiben 34a und 34b aufweist, welche vom Tragmittel 20 jeweils um etwa 90° umschlungen werden. Anschliessend verläuft das Tragmittel 20 entlang des Aufzugsschachts 12 wieder nach oben zum zweiten Befestigungspunkt 28b.

Die Treibscheibe 26 überträgt die vom Motor 16 erzeugten Kräfte auf das Tragmittel 20, welches sowohl mit der Aufzugskabine 10 als auch mit dem Gegengewicht 32 gekoppelt ist. Dabei bewegen sich bei einer Drehung der Treibscheibe 26 die Aufzugskabine 10 und das Gegengewicht 32 durch das Tragmittel 20 gegenläufig im Aufzugsschacht 12 aufwärts und abwärts. Fig. 2A zeigt die Aufzugskabine 10 in ihrer unteren Betriebsendstellung (d.h. das Gegengewicht 32 in seiner oberen Position), und Fig. 2B zeigt die Aufzugskabine 10 in ihrer oberen Betriebsendstellung (d.h. das Gegengewicht 32 in seiner unteren Position).

Ein wesentlicher Vorteil des Treibscheibenantriebs ist die Möglichkeit, aufgrund des vorgesehenen Gegengewichts 32 mit verhältnismässig niedrigen Motordrehmomenten der Antriebsmaschine 14 auszukommen. Obwohl nicht dargestellt, wird auch das Gegengewicht 32 üblicherweise entlang von vertikalen Führungsschienen zum Beispiel an den Wänden des Aufzugsschachts 12 geführt.

In der Schachtgrube 36 des Aufzugsschachts 12 sind üblicherweise Puffer 38 für die Aufzugskabine 10 und Puffer 40 für das Gegengewicht 32 angeordnet.

Der Aufbau einer Aufzugsanlage mit Treibscheibenantrieb wurde vorstehend anhand von Fig. 2A und 2B beispielhaft erläutert; es sind aber zahlreiche Varianten denkbar.

Beispielsweise ist es auch möglich, die beiden Kabinentragscheiben 34a, 34b an der Oberseite der Aufzugskabine 10 anzubringen (analog zur Gegengewichtstragscheibe 30 in Fig. 2A und 2B). In analoger Weise kann die Gegengewichtstragscheibe 30 anstatt an der Oberseite des Gegengewichts 32 auch unterhalb davon angebracht werden, sodass das Tragmittel 20 das Gegengewicht 32 unterschlingt. Ausserdem sind die Anzahlen der Tragscheiben natürlich nicht nur auf die eine Gegengewichtstragscheibe 30 und die zwei Kabinentragscheiben 34a, 34b beschränkt.

Während in Fig. 2A und 2B jeweils nur ein Tragmittel 20 dargestellt ist, ist es insbesondere aus Sicherheitsgründen üblich, mehrere gleichartige Tragmittel 20 vorzusehen, die parallel zueinander in dem oben beschriebenen Sinne verlaufen.

In Fig. 2A und 2B ist eine 1:2-Aufhängung der Aufzugskabine 10 durch das Tragmittel 20 veranschaulicht. Es sind aber auch andere Tragmittelanordnungen wie zum Beispiel eine 1:4-Aufhängung, eine 1:8-Aufhängung, usw. möglich, bei denen sich der von der Antriebsmaschine 14 angetriebene Bereich des Tragmittels 20 vier, acht, usw. Mal schneller als die Aufzugskabine 10 bewegt. Eine Aufzugsanlage mit einer 1:4-Aufhängung ist zum Beispiel in der WO 2006/005215 A2 der Anmelderin ausführlich beschrieben, auf welches Dokument deshalb bezüglich des Aufbaus und der Funktionsweise einer 1:4-Aufängung vollinhaltlich Bezug genommen wird.

Die Antriebsmaschine 14 ist in Fig. 2A und 2B in einem Maschinenraum 22 oberhalb des Aufzugsschachts 12 angeordnet, wobei der Maschinenraum 22 vom Aufzugsschacht 12 durch eine Schachtdecke 24, einen Querträger, eine Brücke oder dergleichen getrennt ist. Es sind aber ebenso maschinenraumlose Aufzugsanlagen bekannt, und die Antriebsmaschine 14 kann alternativ auch unterhalb des Aufzugsschachts 12 oder neben diesem angeordnet werden. Beispielsweise kann die Antriebsmaschine 14 auch auf den Führungsschienen für die Aufzugskabine 10 und/ oder das Gegengewicht 32 befestigt sein.

Bei Aufzugsanlagen mit höheren Betriebsgeschwindigkeiten werden im Allgemeinen neben den oben beschriebenen Tragmitteln 20 auch so genannte Unterseile benutzt. Sie werden über eine in der Schachtgrube 36 befindliche Umlenkrolle zwischen Kabinenboden und Unterseite Gegengewicht 32 gespannt. Auf diese Weise sollen sie die Gewichte der oberen Tragmittel 20 ausgleichen und ein "Springen" der Aufzugskabine 10 oder des Gegengewichts 32 verhindern, wenn das Gegengewicht 32 bzw. die Aufzugskabine 10 aufsetzt oder fängt.

### 3. Antriebsmaschine

Bei den Antriebsmaschinen 14 der mechanischen Antriebe unterscheidet der Fachmann zwischen getriebelosen Antriebsmaschinen und Antriebsmaschinen mit Getriebe. Die wesentlichen Bestandteile der Antriebsmaschinen sind dabei ein Motor 16, eine Bremse, eine Treibscheibe 26 bzw. eine Trommel 18 und ggf. ein Getriebe. Der Motor, die Bremse und ggf. das Getriebe sind dabei zwecks exakter Ausrichtung und geräuscharmen Betriebs vorzugsweise als eine integrale Baueinheit zum Beispiel auf einer gemeinsamen Grundplatte aufgebaut.

### 3.1 Motor

Der Motor 16 der Antriebsmaschine 14 für die Aufzugsanlage ist üblicherweise ein Elektromotor, der an die gewünschten Parameter wie Beschleunigungswerte, Fahrgeschwindigkeiten, Grösse der Nutzlasten, Geräuschverhältnisse, Schalthäufigkeiten und Einschaltdauer angepasst ist. Ausserdem müssen die Motoren in ihrem elektrischen und mechanischen Teil sehr robust und überlastbar sein.

Die in Aufzugsanlagen eingesetzten Motoren sind am häufigsten Drehstrommotoren, die mit einer oder mit mehreren fixen Drehzahlen betreibbar sind. Bei höheren Fahrgeschwindigkeiten oder besonderen Ansprüchen an die Anhaltegenauigkeit werden vorzugsweise mittels Frequenzumrichter drehzahlgeregelte Drehstrommotoren oder Permanentmagnetmotoren verwendet.

### 3.2 Bremse

Die Bremse einer Antriebsmaschine 14 für eine Aufzugsanlage ist vorzugsweise als mechanisch wirkende Reibbremse ausgeführt und kann als Haltebremse und/oder als Verzögerungsbremse dienen. Als Haltebremse muss sie die Aufzugskabine 10 an der gewünschten Halteposition festhalten; als Verzögerungsbremse hat sie die Aufgabe, die Aufzugskabine an der gewünschten Halteposition sicher und exakt zum Halten zu bringen. Verzögerungen lassen sich auch durch Polumschaltung bei entsprechenden Drehstrommotoren oder durch Reduktion der Frequenz des Motorstroms bei Drehstrom- oder Permanentmagnetmotoren bewirken.

### 3.3 Treibscheibe

Die Treibscheibe 26 ist ein wesentlicher Bestandteil der Antriebsmaschine 14 mit Treibscheibenantrieb. Dabei muss die Treibscheibe 26 jeweils optimal an die Art des für die Aufzugsanlage verwendeten Tragmittels 20 angepasst sein. So werden die vom Motor 16 der Antriebsmaschine 14 erzeugten Kräfte zum Beispiel bei einem seilartigen oder riemenartigen Tragmittel 20 mittels Traktionswirkung von der Treibscheibe 26 auf das Tragmittel 20 übertragen, bei einem kettenartigen Tragmittel 20 ist die Treibscheibe 26 dagegen mit einem Zahnkranz ausgebildet.

Die erzielte Traktionswirkung hängt sehr stark von der genauen Konstruktion des seil- oder riemenartigen Tragmittels 20 und der zugehörigen Treibscheibe 26 ab. Beispielsweise können Treibscheibe und riemenartige Tragmittel Umfangsrippen und Umfangsrillen mit keilförmig angeordnete Traktionsflächen aufweisen, über welche sie miteinander in Kontakt stehen. Analog zur Wirkung eines Keilriemens kann bei einer solchen Ausführungsform durch Wahl des Winkels zwischen den Flanken der Rippen und Rillen die von der Treibscheibe auf das Tragmittel übertragbare Traktionskraft beeinflusst werden. Ausserdem dienen zusammenwirkende Rippen und Rillen der Treibscheibe und des Tragmittels der seitlichen Führung des Tragmittels auf der Treibscheibe bzw. auf entsprechend ausgeführten Umlenkrollen.

Die Antriebsmaschine 14 weist im Allgemeinen mehrere parallele Treibscheiben 26 oder eine Treibscheibe 26 mit mehreren parallelen Kraftübertragungsabschnitten auf, deren Anzahl jener der parallel verlaufenden Tragmittel 20 der Aufzugsanlage entspricht.

Aufbau und Funktionsweise der erfindungsgemässen Treibscheibe 26 werden weiter unten in Zusammenhang mit dem erfindungsgemässen Tragmittel 20 im Detail beschrieben.

### 3.4 Trommel

Während bei einem Treibscheibenantrieb das Tragmittel 20 über die Treibscheibe 26 läuft und je nach Art des Tragmittels zum Beispiel durch Traktion mitgenommen wird, werden bei einem Trommelantrieb die Tragmittel 20 auf eine Trommel 18 gewickelt, deren Länge der Förderhöhe der Aufzugsanlage angepasst sein muss. In den meisten derzeit bekannten Aufzugsanlagen mit einem Trommelantrieb ist die Antriebsmaschine 14 mit der Trommel 18 im Gegensatz zur vereinfachten Darstellung von Fig. 1 unten angeordnet.

### 4. Tragmittel

### 4.1 Aufbau des Tragmittels

Als Tragmittel für die mechanischen Antriebe kommen bei Aufzugsanlagen derzeit seilartige Tragmittel (Drahtseile), kettenartige Tragmittel und in letzter Zeit vermehrt auch riemenartige Tragmittel (Tragriemen) in Frage. Die vorliegende Erfindung betrifft dabei die Verbesserung riemenartiger Tragmittel, auf die seilartigen und die kettenartigen Tragmittel soll deshalb an dieser Stelle nicht näher eingegangen werden.

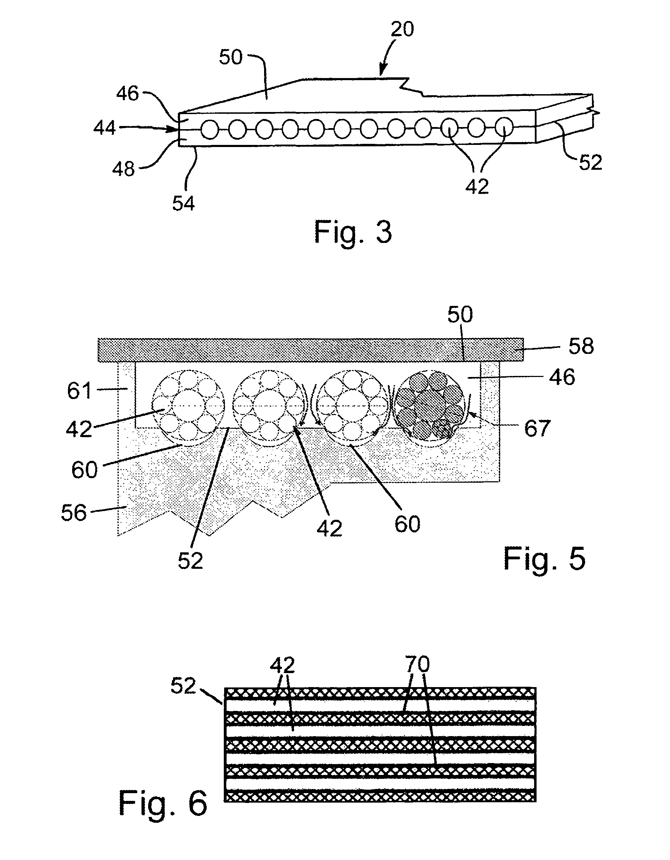

Aufbau, Funktionsweise und Herstellungsverfahren für ein riemenartiges Tragmittel für eine Aufzugsanlage gemäss der vorliegenden Erfindung werden nachfolgend unter Bezug auf Fig. 3 bis 11 näher beschrieben.

Fig. 3 zeigt zunächst schematisch den Grundaufbau eines riemenartigen Tragmittels 20 für eine Aufzugsanlage.

Beim mit Fig. 3 dargestellten Tragmittel sind mehrere Zugträger, insbesondere mehrere seilartige Zugträger 42 in einem riemenartigen Formkörper (Riemenkörper) 44 eingebettet. Als seilartige Zugträger 42 sind im Rahmen der vorliegenden Erfindung insbesondere Seile, Litzen, Cords oder Geflechte aus Metalldrähten, Stahl, Kunststofffasern, Mineralfasern, Glasfasern, Kohlefaser und/oder Keramikfasern verwendbar. Die seilartigen Zugträger 42 können jeweils aus einem bzw. mehreren Einfachelementen oder aus ein- oder mehrfach verseilten Elementen gebildet sein.

In einer Ausführung der Erfindung umfasst jeder Zugträger 42 eine zweilagige Kernlitze mit einem Kerndraht (z.B. 0,19 mm Durchmesser) und zwei um diesen geschlagenen Drahtlagen (z.B. 0,17 mm Durchmesser) sowie um die Kernlitze angeordnete einlagige Aussenlitzen mit einem Kerndraht (z.B. 0,17 mm Durchmesser) und einer um diesen geschlagenen Drahtlage (z.B. 0,155 mm Durchmesser). Ein solcher Zugträgeraufbau, der beispielsweise eine Kernlitze mit 1+6+12 Stahldrähten und acht Aussenlitzen mit 1+6 Stahldrähten aufweisen kann, hat sich in Versuchen als vorteilhaft bezüglich Festigkeit, Herstellbarkeit und Biegbarkeit erwiesen. Vorteilhafterweise weisen dabei die zwei Drahtlagen der Kernlitze denselben Schlagwinkel auf, während die eine Drahtlage der Aussenlitzen entgegen der Schlagrichtung der Kernlitze geschlagen ist und die Aussenlitzen entgegen der Schlagrichtung ihrer eigenen Drahtlage um die Kernlitze geschlagen sind. Die vorliegende Erfindung ist aber selbstverständlich nicht auf Zugträger 42 mit diesem speziellen Zugträgerraufbau beschränkt.

Die Verwendung von seilartigen Zugträgern 42 (auch als Cords bezeichnet) mit geringen Durchmessern bzw. Dicken quer zur Längserstreckung des Tragmittels 20 ermöglicht es, Treibscheiben 26 und Tragscheiben 30, 34a, 34b mit geringen Durchmessern einzusetzen. Der Durchmesser der Zugträger 42 liegt bevorzugt im Bereich von 1,5 bis 4 mm. Riemenartige Tragmittel mit solchen Zugträgern können mit Treibscheiben bzw. Umlenkrollen zusammenwirken, deren Aussendurchmesser bzw. Wirkdurchmesser kleiner als 100 mm, vorzugsweise sogar kleiner als 80 mm ist.

Wie in Fig. 3 veranschaulicht, ist der Riemenkörper 44 des Tragmittels 20 aus einer ersten Riemenlage 46 aus einem ersten plastifizierbaren Werkstoff und einer zweiten Riemenlage 48 aus einem zweiten plastifizierbaren Werkstoff aufgebaut und besitzt eine erste Aussenfläche 50 der ersten Riemenlage 46, eine Verbindungsebene 52 zwischen der ersten und der zweiten Riemenlage 46, 48 sowie eine zweite Aussenfläche 54 der zweiten Riemenlage 48. Die mehreren Zugträger 42 sind im Bereich der Verbindungsebene 52 in dem zweilagigen Riemenkörper 44 eingebettet.

Die erste Aussenfläche 50 der ersten Riemenlage 46 des Riemenkörpers 44 steht zum Beispiel mit der Traktionsfläche der Treibscheibe 26 in Eingriff, während die zweite Aussenfläche 54 der zweiten Riemenlage 48 mit den Laufflächen der Gegengewichtstragscheibe 30 und der beiden Kabinentragscheiben 34a, 34b in Eingriff steht. Selbstverständlich ist das Tragmittel 20 der Erfindung aber auch in umgekehrter Weise in einer Aufzugsanlage mit Treibscheibenantrieb einsetzbar, wie sie in Fig. 2A und 2B dargestellt ist. D.h. die erste Aussenfläche 50 der ersten Riemenlage 46 des Riemenkörpers 44 kann ebenso mit der Traktionsfläche der Treibscheibe 26 in Eingriff stehen, während die zweite Aussenfläche 54 der zweiten Riemenlage 48 mit den Laufflächen der Gegengewichtstragscheibe 30 und der beiden Kabinentragscheiben 34a, 34b in Eingriff steht.

Der erste Werkstoff für die erste Riemenlage 46 und der zweite Werkstoff für die zweite Riemenlage 48 sind vorzugsweise aus einem Elastomer, beispielsweise aus Polyurethan (PUR), Ethylen-Propylen-Dien-Kautschuk (EPDM), Acrylnitril-Butadien-Kautschuk (NBR), Polychloropren (CR) oder Naturkautschuk hergestellt. Es können jedoch auch weitere Kunststoffe, wie Polyamid (PA), Polyethylen (PE), Polyethersulfon (PES), Polyphenylsulfid (PPS), Polytetrafluorethylen (PTFE), Polyvinylchlorid (PVC) und dergleichen für die Riemenlagen 46, 48 zum Bilden des Formkörpers 44 des Tragmittels verwendet werden. Die Erfindung soll jedoch nicht auf die genannten Materialien beschränkt sein. Zusätzlich können den Werkstoffen für die erste und die zweite Riemenlage 46, 48 auch spezielle Haftvermittler zugegeben werden, um die Festigkeit der Verbindung zwischen den Riemenlagen 46, 48 und zwischen der ersten Riemenlage 46 und den Zugträgern 42 zu erhöhen. Ebenso ist die Einlagerung weiterer Gewebe, Gewebefasern oder anderer Füllstoffe möglich.

Wie weiter unten in mehr Einzelheiten erläutert, werden die erste und die zweite Riemenlage jeweils in einem Extrusionsverfahren gebildet. Vorzugsweise werden dafür thermoplastische Elastomere als Werkstoffe verwendet. Grundsätzlich ist es auch möglich, vulkanisierbare Elastomere bzw. Gummimaterial einzusetzen, wobei die endgültige Vulkanisation dann erst nach dem Extrusionsverfahren stattfinden kann, um einen fliessfähigen Werkstoff für den Extrusionsprozess zu haben.

Gemäss der Erfindung ist es möglich, für die erste Riemenlage 46 und die zweite Riemenlage 48 jeweils den gleichen Werkstoff mit gleichen Eigenschaften, jeweils den gleichen Werkstoff mit unterschiedlichen Eigenschaften oder unterschiedliche Werkstoffe einzusetzen. Wichtige Eigenschaften des/der Werkstoffe(s) für den Formkörper 44 sind insbesondere die Elastizität, der Reibwert, die Verschleissfestigkeit, die Fliessfähigkeit beim Extrudieren, die Fähigkeit, sich mit den seilartigen Zugträgern 42 zu verbinden, die Farbe, die Lichtbeständigkeit und dergleichen.

In besonderen Ausgestaltungen der Erfindung kann zumindest eine der Riemenlagen 46, 48 aus einem transparenten Werkstoff gebildet sein, um eine Prüfung des Tragmittels 20 auf Beschädigungen, insbesondere auf gebrochene Zugträger 42, zu vereinfachen. Ausserdem kann die erste und/oder die zweite Riemenlage in antistatischer Qualität, d. h. aus einem Material, das nicht elektrostatisch aufladbar ist, ausgeführt sein. In einer weiteren Ausgestaltung kann zum Beispiel die zweite Riemenlage lumineszierend ausgeführt sein, um die Rotation der Treibscheibe oder der Trommel erkennbar zu machen oder um bestimmte optische Effekte zu bewirken.

Die Einbettung der seilartigen Zugträger 42 in die erste Riemenlage 46 bewirkt eine Schmierung ihrer Einzeldrähte bei deren gegenseitiger Bewegung im Einsatz in einer Aufzugsanlage. Ausserdem werden die Zugträger 42 so zusätzlich vor Korrosion geschützt und exakt in ihren gewünschten Positionen gehalten.

Zur Erhöhung des Anpressdrucks des Tragmittels 20 an eine Treibscheibe 26 ist es in Hinblick auf eine Erhöhung der Traktions- bzw. Treibfähigkeit vorteilhaft, die Kontaktflächen des Riemenkörpers 44, die mit der Treibscheibe 26 zusammenwirken, d.h. die erste oder die zweite Aussenfläche 50, 54, mit so genannten (Keil-)rippen (nicht dargestellt in Fig. 3) auszubilden. Die genannten Rippen erstrecken sich als längliche Erhebungen in Richtung der Längserstreckung des Tragmittels 20 und kommen bevorzugt mit entsprechend geformten Rillen auf der Lauffläche der Treibscheibe 26 in Eingriff. Gleichzeitig gewährleisten die Keilrippen mit ihrem Eingriff in die Rillen seitens der Treibscheibe 26 eine seitliche Führung des Tragriemens 20 auf der Treibscheibe 26.

Des Weiteren können die beiden Aussenflächen 50, 54 des Tragriemens 20 der Erfindung über ihre gesamte Länge oder nur in entsprechenden Teilabschnitten, in denen sie mit der Treibschreibe 26 und den verschiedenen Trag- und Umlenkscheiben der Aufzugsanlage in Kontakt kommen, mit einer speziellen Oberflächeneigenschaft versehen sein, die insbesondere die Gleiteigenschaften des Tragriemens 20 beeinflusst. Beispielsweise kann die mit der Traktionsfläche der Treibscheibe 26 kämmende Aussenfläche 50, 54 des Tragriemens mit einer traktionsvermindernden Beschichtung, Oberflächenstruktur oder dergleichen versehen sein. Alternativ kann der Tragriemen 20 auch an einer oder an beiden Aussenflächen 50, 54 mit einem Gewebe oder dergleichen ummantelt werden, um die Eigenschaften der Tragriemenoberfläche zu beeinflussen.

Es ist grundsätzlich möglich, mehrere unterschiedlich ausgebildete Tragriemen 20 der beschriebenen Art in einer Aufzugsanlage vorzusehen.

### 4.2 Herstellung des Tragmittels

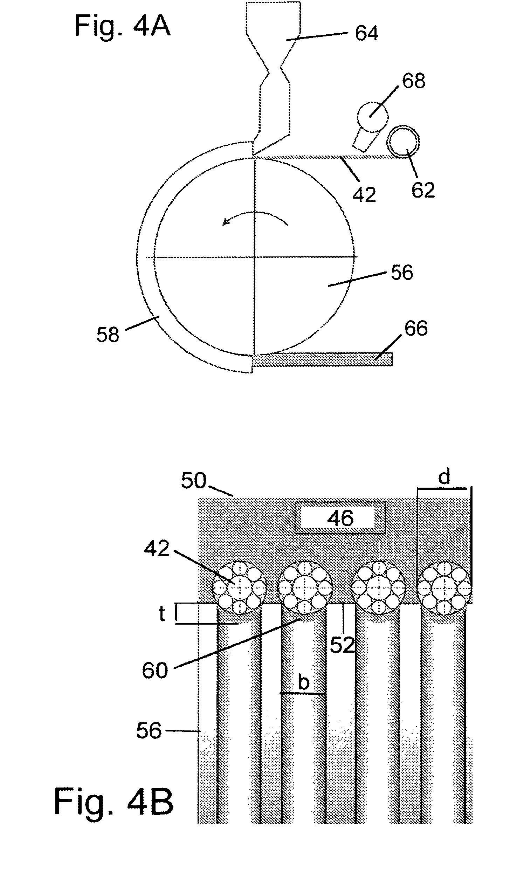

Anhand der Fig. 4 bis 7 werden nun das Herstellungsverfahren des Tragriemens 20 der Erfindung und die entsprechende Vorrichtung zur Herstellung des Tragriemens im Detail erläutert.

Bei dem Verfahren zum Herstellen des Tragriemens 20 mit einer ersten Riemenlage 46 und einer zweiten Riemenlage 48 und darin eingebetteten seilartigen Zugträgern 42 handelt es sich um ein zweistufiges Verfahren. Die erste Fertigungsstation dieses zweistufigen Herstellungsverfahrens ist in Fig. 4A veranschaulicht, und die zweite Fertigungsstation ist in Fig. 4B dargestellt. Es ist zu beachten, dass die erste und die zweite Fertigungsstation entweder als separate Fertigungsstation oder innerhalb eines integralen Fertigungsprozesses unmittelbar hintereinandergeschaltet sind.

Wie in Fig. 4A dargestellt, umfasst die erste Fertigungsstation für das riemenartige Tragmittel 20 der Erfindung ein erstes rotierendes Formrad 56 und eine einen Umfangsabschnitt dieses ersten Formrades 56 umschlingende erste Führung 58. Diese erste Führung 58 kann zum Beispiel aus einem endlosen Formband gebildet sein, das über mehrere Rollen geführt wird und zusammen mit der Umfangsfläche des ersten Formrades 56 und zwei aus dieser herausragenden Führungsrippen 61 einen Formhohlraum bildet, wie dies zum Beispiel in der eingangs genannten DE 102 22 015 A1 offenbart ist. Alternativ kann die erste Führung 58 eine feststehende Aussenwand des genannten Formhohlraums sein, welchen sie zusammen mit der Umfangsfläche des ersten Formrades 56 und den zwei aus dieser herausragenden Führungsrippen 61 bildet. In diesem Fall ist die dem Formrad zugewandte Seite der ersten Führung 58 vorteilhafterweise mit einem Gleitelement, beispielsweise einem Gleitbelag aus PTFE, versehen, um eine Relativbewegung zwischen der die feststehende Aussenwand des Formhohlraums bildenden ersten Führung 58 und dem mit dem Formrad 56 umlaufenden extrudierten Formkörper des entstehenden Teilriemens 66 zu erleichtern.

Die Umfangsfläche des ersten Formrades 56 ist mit mehreren Längsnuten 60 ausgebildet, die sich entlang der Umfangsrichtung des Formrades erstrecken, wie in Fig. 4B dargestellt. Die Breite der Umfangsfläche des Formrades 56, die vorzugsweise durch geeignete seitliche Führungselemente 61 (siehe Fig. 5) begrenzt wird, entspricht der gewünschten Breite des Tragriemens 20, und die Anzahl der Längsnuten 60 in der Umfangsfläche des ersten Formrades 56 entspricht der gewünschten Anzahl der seilartigen Zugträger 42 in dem Tragriemen 20.

Wie in Fig. 4B veranschaulicht, ist die Breite b der Längsnuten 60 kleiner gewählt als der Durchmesser d der Zugträger 42. Beispielsweise liegt die Breite b der Nuten 60 in einem Bereich von etwa 70% bis 95% des Durchmessers d der Zugträger 42, besonders bevorzugt in einem Bereich von etwa 75% bis 90%. Ausserdem liegt die Tiefe t der Längsnuten 60 in einem Bereich von etwa 25% bis 50%, vorzugsweise in einem Bereich von etwa 30% bis 40% des Durchmessers d der Zugträger 42.

In der ersten Fertigungsstation von Fig. 4A werden nun die seilartigen Zugträger 42 von einer Vorratsrolle 62 dem ersten Formrad 56 zugeführt, wobei sie in den Längsnuten 60 der Umfangsfläche des ersten Formrades 56 geführt und vorzugsweise unter Vorspannung gehalten werden. Aufgrund der oben beschriebenen Dimensionierung der Breite b und der Tiefe t der Längsnuten 60 im Verhältnis zum Durchmesser d der Zugträger 42 werden die Zugträger 42 nur teilweise in den Längsnuten 60 aufgenommen. Die Zugträger 42 berühren das erste Formrad 56 nur entlang der Randkanten der Längsnuten 60, so dass zwischen den Zugträgern und dem ersten Formrad 56 in den Bereichen der Längsnuten 60 Freiräume bzw. Hohlräume vorhanden sind.

Aus einem ersten Extruder 64 wird ein fliessfähiger Strom des ersten Werkstoffs im Wesentlichen drucklos in den zwischen dem ersten Formrad 56 und der ersten Führung 58 gebildeten Formhohlraum gegeben, wobei der wenigstens eine Zugträger 42 auf der Umfangsfläche des ersten Formrades 56 anliegt, bevor der Strom des ersten Werkstoffs in den Formenhohlraum eintritt. Der Werkstoffstrom aus dem ersten Extruder 64 wird durch die erste Führung 58 gegen die Zugträger 42 und das erste Formrad 56 gepresst und erhält so seine endgültige Form, um schliesslich den Teilriemen 66 mit der ersten Riemenlage 46 und den darin eingebetteten Zugträgern 42 zu bilden. Die erste Aussenfläche 50 des Teilriemens 66 bzw. des Tragriemens 20 ist dabei der Führung 58 zugewandt und die die Verbindungsebene 52 bildende Fläche des Teilriemens 66 ist dem ersten Formrad 56 zugewandt.

Wie in Fig. 5 veranschaulicht, fliesst bei diesem Einbettungsprozess der fliessfähige erste Werkstoff auch in die Hohlräume innerhalb der seilartigen Zugträger 42 und durch diese Hohlräume sowie durch die aufgrund der Verdrillung der Zugträger 42 gebildeten Freiräume zwischen den Zugträgern 42 und dem ersten Formrad 56 (siehe durch Pfeile angedeutete Fliesslinien 67 in Fig. 5) auch in die zwischen den Zugträgern 42 und den entsprechenden Nuten 60 gebildeten Freiräume bzw. Hohlräume des Formhohlraums. Das Eindringen des ersten Werkstoffs in diese Freiräume bzw. Hohlräume wird dadurch erleichtert, dass die Zugträger 42 das erste Formrad 56 nur entlang der Randkanten der Längsnuten 60 berühren, so dass die Zugträger 42 mit ihren verdrillten Aussenlitzendrähten den Zufluss des Werkstoffs in die Hohlräume zwischen den Zugträgern und dem ersten Formrad 56 kaum behindern. Auf diese Weise werden einerseits die Hohlräume innerhalb der seilartigen Zugträger 42 zumindest teilweise mit dem ersten Werkstoff gefüllt, wodurch sich eine sehr gute Verbindung zwischen den Zugträgern 42 und der ersten Riemenlage 46 aus dem ersten Werkstoff ergibt. Andererseits werden die Zugträger 42 möglichst vollständig in der ersten Riemenlage 46 eingebettet, sodass zwischen den eingebetteten Zugträgern 42 und der anschliessend an der Verbindungsfläche 52 angeformten zweiten Riemenlage 48 kein direkter Kontakt existiert.

Die Eigenschaften des ersten plastifizierbaren Werkstoffes (insbesondere seine Fliessfähigkeit) und die Verfahrensparameter der ersten Fertigungsstation (insbes. Temperatur und Druck) sind dabei derart zu wählen, dass der erste Werkstoff während des Einbettungsschritts in die Hohlräume innerhalb der seilartigen Zugträger 42 und die Hohlräume zwischen den Zugträgern 42 und dem ersten Formrad 56 eindringen kann, wie oben anhand von Fig. 5 erläutert.

Bei dem in Fig. 4 bis 5 dargestellten Ausführungsbeispiel steht der wenigstens eine Zugträger 42 des Tragriemens 20 nach dem ersten Fertigungsschritt in der ersten Fertigungsstation um etwa 5% bis 20% seines Durchmessers gegenüber der Verbindungsfläche 52 des Teilriemens 66 vor. Dabei sind mehr als 80%, vorzugsweise mehr als 90%, besonders bevorzugt mehr als 95% der Oberfläche des wenigstens einen Zugträgers 42 mit dem ersten plastifizierbaren Werkstoff der ersten Riemenlage 46 bedeckt.

Um die Verbindung zwischen dem ersten plastifizierbaren Werkstoff für die erste Riemenlage 46 und den einzubettenden Zugträgern 42 weiter zu verbessern, ist es von Vorteil, wenn die Zugträger 42 während des Einbettungsprozesses erwärmt werden. Hierzu ist zum Beispiel eine erste Heizvorrichtung 68 zum Erwärmen der dem ersten Formrad 56 zuzuführenden Zugträger 42 so angeordnet, dass letztere erwärmt werden, bevor sie auf das Formrad 56 auflaufen.

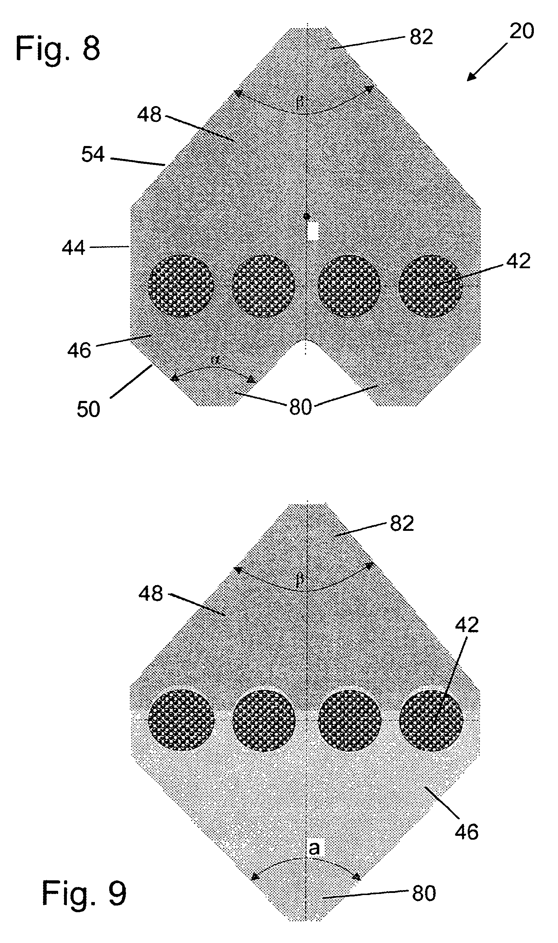

Obwohl in Fig. 4 und 5 nicht dargestellt, kann die erste Führung 58 an ihrer dem ersten Formrad 56 zugewandten Innenseite profiliert sein, um der ersten Aussenfläche 50 des Teilriemens 66 bzw. des fertigen Tragriemens 20 ein Profil zu verleihen. Insbesondere ist es möglich, die erste Aussenfläche 50 des Tragriemens 20 mit in Längsrichtung verlaufenden Rippen bzw. Keilrippen zu versehen, wie dies später in Zusammenhang mit speziellen Ausführungsformen des Tragriemens 20 anhand der Fig. 8 bis 10 diskutiert wird. Alternativ oder zusätzlich können auch weitere Oberflächenstrukturen in diese erste Aussenfläche 50 eingebracht werden. Die Profilierung bzw. Strukturierung der ersten Aussenfläche 50 des Tragriemens 20 erfolgt dabei in vorteilhafter Weise während des Einbettungsschrittes des wenigstens einen Zugträgers 42 in die erste Riemenlage 46.

Nach einem bevorzugten Alternativverfahren wird im genannten Einbettungsschritt der Teilriemen 66 mit einer die erste Aussenfläche 50 des Tragriemens 20 bildenden unprofilierten Ebene extrudiert. Nach dem nachfolgend beschriebenen zweiten Fertigungsschritt wird der Tragriemen 20 in einem separaten weiteren Fertigungsschritt so nachbearbeitet, dass er die vorstehend erwähnten, sich in Längsrichtung des Tragriemens erstreckenden Rippen aufweist. Vorteilhafterweise erfolgt diese Nachbearbeitung des Tragriemens durch Schleifen mit profilierten Schleifscheiben, die speziell für das Schleifen von elastomeren Materialien geeignet sind. Das abgetragene Material wird dabei abgesaugt und rezykliert.

In einer vorteilhaften Weiterbildung der Erfindung ist das erste Formrad 56 bzw. seine Umfangsfläche derart ausgebildet, dass die Verbindungsfläche 52 des Teilriemens 66 während des Einbettungsschritts mit einer Oberflächenstruktur versehen wird. Wie in Fig. 6 angedeutet, werden vorzugsweise zumindest die Abschnitte der Verbindungsfläche 52 zwischen den Zugträgern 42 mit einer Oberflächenstruktur 70 zum Beispiel in Form einer rasterförmigen oder unregelmässigen Aufrauung, Rändelung oder Riffelung ausgebildet. Zusätzlich können aber auch die Bereiche der Zugträger 42 in der Verbindungsfläche 52 mit einer Oberflächenstruktur 70 ausgebildet werden. Eine solche Oberflächenstruktur 70 vergrössert die Oberfläche der Verbindungsfläche 52 und verbessert so die spätere Verbindung mit der zweiten Riemenlage 48.

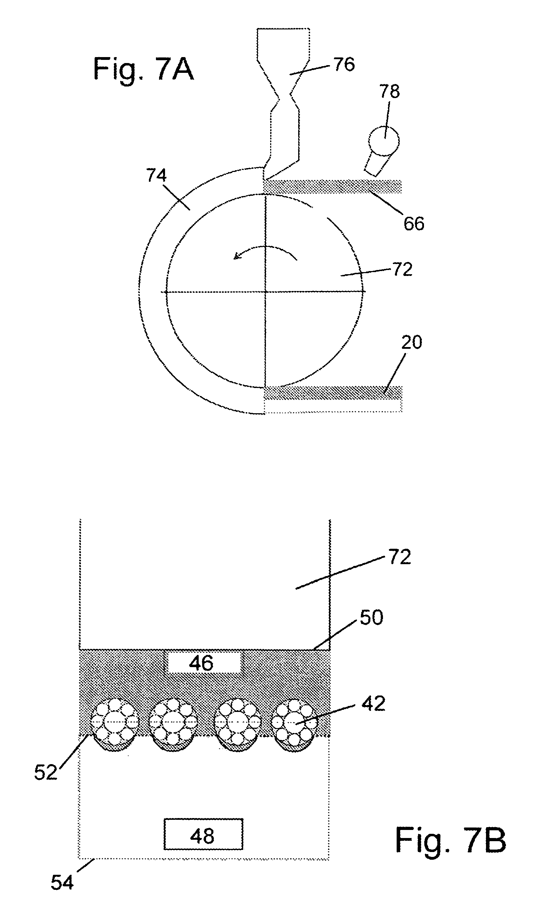

Nach der Fertigstellung des Teilriemens 66 in der ersten Fertigungsstation gemäss Fig. 4A und 4B erfolgt die Fertigstellung des Tragriemens 20 in einer zweiten Fertigungsstation, die beispielhaft in Fig. 7A und 7B gezeigt ist.

Wie in Fig. 7A dargestellt, umfasst die zweite Fertigungsstation ähnlich wie die erste Fertigungsstation für das riemenartige Tragmittel 20 ein im Gegenuhrzeigersinn rotierendes zweites Formrad 72 und eine einen Umfangsabschnitt dieses zweiten Formrades 72 umschlingende zweite Führung 74. Diese zweite Führung 74 kann zum Beispiel wie die erste Führung 58 des ersten Formrads 56 aus einem endlosen Formband gebildet sein, das über mehrere Rollen geführt wird und zusammen mit der Umfangsfläche des zweiten Formrads 72 und zwei hier nicht dargestellten, aus dieser Umfangsfläche herausragenden Führungsrippen einen Formhohlraum bildet. Alternativ kann die zweite Führung 74 eine feststehende Aussenwand des genannten Formhohlraums sein, welchen sie zusammen mit der Umfangsfläche des zweiten Formrades 72 und zwei aus dieser herausragenden Führungsrippen bildet. In diesem Fall ist die dem Formrad 72 zugewandte Seite der zweiten Führung 74 vorteilhafterweise mit einem Gleitelement versehen, um eine Relativbewegung zwischen der die feststehende Aussenwand des Formhohlraums bildenden zweiten Führung 74 und dem mit dem Formrad 72 umlaufenden extrudierten Formkörper der entstehenden zweiten Riemenlage 48 zu erleichtern.

Im Gegensatz zur ersten Fertigungsstation von Fig. 4A und 4B ist das zweite Formrad 72 der zweiten Fertigungsstation mit einer Umfangsfläche ausgebildet, die dem Profil der ersten Aussenfläche 50 der ersten Riemenlage 46 bzw. des Teilriemens 66 entspricht. In dem in Fig. 7B gezeigten Ausführungsbeispiel ist eine flache Umfangsfläche für das zweite Formrad 72 vorgesehen für den Fall, dass die erste Aussenfläche 50 des Tragriemens 20 kein Profil, d. h. eine flache Oberflächenstruktur aufweisen soll, oder für den Fall, dass die genannte Aussenfläche 50 erst durch Nachbearbeiten profiliert wird. Die Breite der Umfangsfläche des zweiten Formrades 72, die vorzugsweise durch geeignete seitliche Führungselemente (nicht dargestellt) begrenzt wird, entspricht der gewünschten Breite des Tragriemens 20.

In der zweiten Fertigungsstation gemäss Fig. 7A wird nun der in der oben beschriebenen ersten Fertigungsstation hergestellte Teilriemen 66 dem zweiten Formrad 72 so zugeführt, dass die erste Aussenfläche 50 des Teilriemens 66 mit der Umfangsfläche des zweiten Formrades 72 in Kontakt steht. Aus einem zweiten Extruder 76 wird ein fliessfähiger Strom des zweiten plastifizierbaren Werkstoffs im Wesentlichen drucklos in den zwischen dem zweiten Formrad 72 und der zweiten Führung 74 gebildeten Formhohlraum gegeben. Der Werkstoffstrom aus dem zweiten Extruder 76 wird durch die zweite Führung 74 gegen die Verbindungsfläche des Teilriemens 66 gepresst und als zweite Riemenlage 48 an diesen angeformt. Dabei erhält die zweite Riemenlage 48 ihre endgültige Form und bildet schliesslich mit der ersten Riemenlage 46 und den zwischen beiden Riemenlagen eingebetteten Zugträgern 42 den Tragriemen 20. Die von der zweiten Riemenlage 48 gebildete zweite Aussenfläche 54 des Tragriemens 20 ist dabei der Führung 74 zugewandt.

Wie in Fig. 7B veranschaulicht, fliesst bei diesem Anformungsprozess der fliessfähige zweite Werkstoff gegen die gesamte die Verbindungsebene 52 bildende Fläche des Teilriemens 66. Im Fall einer Oberflächenstrukturierung 70 dieser Verbindungsfläche 52, wie oben erläutert, ist die Verbindung zwischen der ersten und der zweiten Riemenlage 46, 48 besonders gut. Da die Zugträger 42 in der ersten Fertigungsstation möglichst vollständig in die erste Riemenlage 46 eingebettet wurden, kommt die zweite Riemenlage 48 mit den Zugträgern 42 kaum oder gar nicht in Kontakt.

Um die Verbindung zwischen dem zweiten plastifizierbaren Werkstoff für die zweite Riemenlage 48 und dem zuvor gefertigten Teilriemen 66 weiter zu verbessern, ist es von Vorteil, wenn der Teilriemen 66 während des beschriebenen Anformungsprozesses erwärmt wird. Hierzu ist zum Beispiel eine zweite Heizvorrichtung 78 zum Erwärmen des dem zweiten Formrad 72 zuzuführenden Teilriemens 66 so angeordnet, dass letzterer erwärmt wird, bevor er auf das zweite Formrad 72 aufläuft.

Obwohl in Fig. 7A und 7B nicht dargestellt, kann auch die zweite Führung 74 an ihrer dem zweiten Formrad 72 zugewandten Innenseite profiliert sein, um der zweiten Aussenfläche 54 des fertigen Tragriemens 20 ein Profil zu verleihen. Insbesondere ist es möglich, auch die zweite Aussenfläche 54 des Tragriemens 20 mit in Längsrichtung verlaufenden Rippen bzw. Keilrippen zu versehen, wie dies später in Zusammenhang mit speziellen Ausführungsformen des Tragriemens 20 anhand der Fig. 8 bis 10 diskutiert wird. Alternativ oder zusätzlich können auch weitere Oberflächenstrukturen in diese zweite Aussenfläche 54 eingebracht werden. Diese Profilierung bzw. Strukturierung der zweiten Aussenfläche 54 des Tragriemens 20 erfolgt dabei in vorteilhafter Weise während des Anformungsprozesses in der zweiten Fertigungsstation.

Nach einem bevorzugten Alternativverfahren wird im Verlauf des genannten Anformungsprozesses die zweite Riemenlage 48 mit einer die zweite Aussenfläche 54 des Tragriemens 20 bildenden unprofilierten Ebene extrudiert. Nach dem nachfolgend beschriebenen zweiten Fertigungsschritt wird der Tragriemen 20 in einem separaten weiteren Fertigungsschritt so nachbearbeitet, dass er die vorstehend erwähnten, sich in Längsrichtung des Tragriemens erstreckenden Rippen aufweist. Vorteilhafterweise erfolgt diese Nachbearbeitung des Tragriemens durch Schleifen mit profilierten Schleifscheiben, die speziell für das Schleifen von elastomeren Materialien geeignet sind. Das abgetragene Material wird dabei abgesaugt und rezykliert.

Wie bereits oben erwähnt, können für die erste und die zweite Riemenlage 46, 48 wahlweise gleiche oder unterschiedliche Werkstoffe mit gleichen oder unterschiedlichen Eigenschaften verwendet werden. Aufgrund des zweistufigen Herstellungsverfahrens ist es von Vorteil, wenn der zweite Werkstoff eine geringere Fliess- bzw. Schmelztemperatur als der erste Werkstoff besitzt, sodass der vom zweiten Extruder 76 in der zweiten Fertigungsstation zugeführte Werkstoffstrom allenfalls die Oberfläche der ersten Riemenlage 46 an der Verbindungsfläche 50 erweicht, um eine bessere Verbindung zwischen den beiden Werkstoffen zu erzielen, nicht aber den gesamten Teilriemen 66. Damit kann gewährleistet werden, dass die Form des gesamten Teilriemens 66 mit den vom ersten Werkstoff eingeschlossenen Zugträgern 42 praktisch unverändert erhalten bleibt.

In einem bevorzugten Ausführungsbeispiel ist für die zweite Riemenlage 48 des Tragriemens 20 ein weicheres Material als für die erste Riemenlage 46 des Tragriemens 20 gewählt. Zum Beispiel besitzt der erste Werkstoff für die erste Riemenlage 46 eine Shore-Härte von etwa 85 bei Raumtemperatur, während für die zweite Riemenlage 48 ein zweiter Werkstoff mit einer Shore-Härte von etwa 80 bei Raumtemperatur benutzt wird.

In dem obigen Ausführungsbeispiel des Herstellungsverfahrens wurde beschrieben, dass die erste und die zweite Aussenfläche 50, 54 in der ersten bzw. der zweiten Fertigungsstation wahlweise mit ebenen Oberflächen oder mit einem Profil ausgebildet werden können. Es ist ferner möglich, eine oder beide der Aussenflächen 50, 54 mit einer zusätzlichen Beschichtung, Bedampfung, Beflockung oder dergleichen (nicht dargestellt) zu versehen, um die Oberflächeneigenschaften, insbesondere die Reibungseigenschaften der Oberflächen des Tragriemens 20 gezielt zu verändern. Diese Oberflächenbearbeitung kann wahlweise auf die kompletten Aussenflächen 50, 54 oder auf nur einen Teil der Aussenflächen wie zum Beispiel die Flanken von diese Aussenflächen bildenden Keilrippen angewendet werden. Für die zweite Riemenlage 48, die mit den Umlenkscheiben in Kontakt kommt, wird zum Beispiel ein Reibwert von µ ≤ 0,3 bevorzugt.

### 4.3 Spezielle Ausführungsformen des Tragmittels

Bezug nehmend auf Fig. 8 bis 10 werden nun verschiedene bevorzugte Ausführungsformen eines riemenartigen Tragmittels 20 beschrieben, die mit dem oben beschriebenen erfindungsgemässen Herstellungsverfahren herstellbar sind.

Im ersten Ausführungsbeispiel gemäss Fig. 8 weist der Tragriemen 20 einen aus einer ersten Riemenlage 46 und einer zweiten Riemenlage 48 gebildeten Formkörper 44 auf, in dem eine Zugträgeranordnung mit insgesamt vier seilartigen Zugträgern 42 angeordnet ist. Die erste Aussenfläche 50 der ersten Riemenlage 46 ist für den Kontakt mit der Treibscheibe 26 vorgesehen. Sie weist hierzu zwei Treibrippen in Form von Keilrippen 80 auf, die in zugeordnete Rillen der Treibscheibe 26 eingreifen und durch diese seitlich geführt werden, wobei sich infolge der Keilwirkung die Anpresskräfte und damit die Traktionsfähigkeit des Antriebs erhöhen.

Die zweite Aussenfläche 54 der zweiten Riemenlage 48 ist zum Kontakt mit den Kabinentragscheiben 34a, 34b vorgesehen und weist hierzu eine Führungsrippe in Form einer Keilrippe 82 auf, welche in eine zugeordnete Rolle der Umlenkscheibe 34a, 34b eingreift und durch diese seitlich geführt wird.

In dem Ausführungsbeispiel von Fig. 8 ist die Gesamthöhe des Tragriemens (20) grösser bemessen als seine Gesamtbreite. Hierdurch wird die Biegesteifigkeit des Tragriemens 20 um seine Querachse vergrössert und so einem Verklemmen in den Rillen der Treibscheibe 26 und der Tragscheiben 30, 34a, 34b entgegengewirkt. In dem gezeigten Beispiel beträgt das Verhältnis von Gesamtbreite zu Gesamthöhe etwa 0,90.

Der Flankenwinkel α der Treibrippen 80 der ersten Riemenlage 46 ist als Innenwinkel zwischen den beiden Flanken einer Treibrippe 80 definiert und beträgt im Ausführungsbeispiel etwa 90° (allgemein zwischen 60° und 120°). Der entsprechend definierte Flankenwinkel β der Führungsrippe 82 der zweiten Riemenlage 48 beträgt in diesem Beispiel etwa 80° (allgemein zwischen 60° und 100°).

Wie in Fig. 8 erkennbar, ist die Flankenhöhe der Führungsrippe 82 grösser als die Flankenhöhe der beiden Treibrippen 80. Dadurch kann die Führungsrippe 82 tiefer in eine entsprechende Rille der Umlenkscheiben 30, 34a, 34b eintauchen als dies bei den Treibrippen 80 und den zugeordneten Rillen der Treibscheibe 26 der Fall ist. Ebenso ist in Fig. 8 erkennbar, dass auch die Flankenbreite der Führungsrippe 82 grösser ist als jene der beiden Treibrippen 80. Durch die grössere Flankenbreite der Führungsrippe 82 wird der Tragriemen 20 auf seiner zweiten Aussenseite 54 über einen weiteren Bereich in Querrichtung geführt, wodurch das Risiko des Herausspringens des Tragriemens aus seiner Führungsrille in der Umlenkscheibe reduziert wird.

Wie in Fig. 8 angedeutet, haben die Keilrippen 80, 82 jeweils eine abgeflachte Spitze mit einer Breite, die mindestens so gross wie der minimale Abstand der entsprechenden Gegenflanken der Rillen der Scheiben 26, 30, 34a, 34b ist. Dadurch wird vermieden, dass die Spitzen der Keilrippen den Grund der korrespondierenden Keilrillen in den genannten Scheiben berühren und so vor einer entsprechenden Spannungskonzentration geschützt sind.

Die erste Aussenfläche 50 kann zumindest in den Bereichen der Keilrippen 80, die mit den Flanken der Treibscheibe 26 in Reibschluss treten, eine Beschichtung mit einer PA-Folie oder dergleichen aufweisen. Weiter besteht die Möglichkeit, eine Keilrippe 80 mit einer reibwert- und/oder geräuschmindernden Beschichtung zu versehen.

Ein Tragriemen 20, wie er oben anhand von Fig. 8 beschrieben worden ist, ist zum Beispiel in der noch nicht veröffentlichten EP 06127168.0 der Anmelderin ausführlich erläutert, auf welche deshalb bezüglich des Aufbaus und der Form des Tragriemens 20 vollinhaltlich Bezug genommen wird.

Das in Fig. 9 veranschaulichte zweite Ausführungsbeispiel eines Tragriemens 20 unterscheidet sich von dem oben beschriebenen Beispiel dadurch, dass anstelle der zwei Keilrippen 80 auf der Seite der ersten Riemenlage 46 nur eine Keilrippe 80 ausgebildet ist. Auch diese eine Keilrippe 80 besitzt einen Flankenwinkel α von etwa 90° (allgemein zwischen 60° und 120°) und eine abgeflachte Spitze. Insgesamt ergibt sich bei diesem Tragriemen 20 sowohl an der ersten als auch an der zweiten Aussenfläche 50, 54 ein V-Profil. Insgesamt weist der mit Fig. 9 offenbarte Tragriemen einen Querschnitt auf, der geometrisch einem Drachenviereck (Deltoid) entspricht. Sind die Flankenwinkel α und β gleich gross, so entspricht der Gesamtquerschnitt des Tragriemens einer Raute (Rhombus). Ein solcher Tragriemen hat den Vorteil, dass er sich mit seinen beiden Seiten um Treib- und Umlenkscheiben führen lässt, die mit identisch geformten Keilrillen versehen sind.

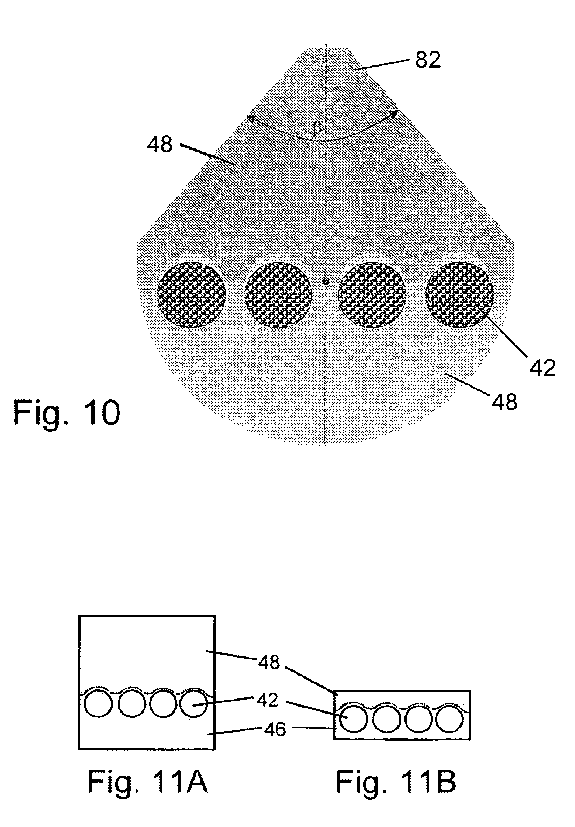

Fig. 10 zeigt ein drittes Ausführungsbeispiel des Tragriemens 20. Dieser unterscheidet sich von dem in Fig. 9 dargestellten Tragriemen 20 dadurch, dass die Keilrippe 80 der ersten Riemenlage 46 insgesamt gerundet ausgebildet ist.

Es ist selbstverständlich, dass die Ausführungsbeispiele der Fig. 8 bis 10 nur beispielhaft sind und die Erfindung nicht auf diese speziellen Formen des Tragriemens 20 einschränken sollen. Der Fachmann wird ohne weiteres weitere Varianten des Tragriemens erkennen, die mit dem oben beschriebenen Herstellungsverfahren der Erfindung gefertigt werden können.

Obwohl in den Ausführungsbeispielen der Fig. 8 bis 10 jeweils die Gesamthöhe des Tragriemens 20 grösser bemessen war als seine Gesamtbreite, ist die Erfindung selbstverständlich nicht darauf beschränkt. Wie in Fig. 11A und 11B angedeutet, umfasst die vorliegende Erfindung sowohl Tragriemen 20, bei denen die Höhe grösser als die Breite ist (Fig. 11A), als auch Tragriemen 20, bei denen die Breite grösser als die Höhe ist (Fig. 11 B). Darüber hinaus sind sowohl rechteckige wie auch quadratische Querschnittsformen für den Tragriemen 20 denkbar. Vorzugsweise liegt das Verhältnis der Gesamtbreite zur Gesamthöhe des Tragriemens 20 im Bereich zwischen 0,8 und 1,2, besonders bevorzugt im Bereich zwischen 0,9 und 1,1.

Im obigen Ausführungsbeispiel wurde die Herstellung eines Tragriemens 20 mit einer bestimmten Breite und einer bestimmten Anzahl von eingebetteten Zugträgern 42 und Keilrippen 80, 82 beschrieben. Insbesondere im Fall von schmalen Tragriemen 20 (d.h. Höhe/Breite > 1), wie sie in den Figuren 8 bis 10 beispielhaft gezeigt sind, ist es aber im Rahmen der Erfindung auch möglich, mehrere solche Tragriemen 20 gleichzeitig nebeneinander durch jeweils eine entsprechend konzipierte erste und zweite Fertigungsstation laufen zu lassen.

Nach einer Variante einer solchen Parallelfertigung wird zunächst ein Breitriemen von der breite mehrerer Tragriemen 20 mit einer grossen Anzahl von Zugträgern 42 hergestellt, der anschliessend in mehrere einzelne Tragriemen 20 aufgetrennt wird. Hierzu sind verschiedene mechanische Verfahren wie Schneiden, Sägen, usw. denkbar. Zur Vereinfachung des Trennungsvorgangs können in dem Breitriemen auch sich in seiner Längsrichtung erstreckende Sollbruchstellen vorgesehen werden. Zum Auftrennen eines solchen Breitriemens mit Sollbruchstellen in einzelne Tragriemen 20 kann eine Treibscheibe 26 vorgesehen werden, bei der im Bereich gewünschter Trennstellen vergrösserte Abstände zwischen zwei benachbarten Rillen vorhanden sind, wodurch bei Inbetriebnahme der Aufzugsanlage der Breitriemen an diesen Stellen auseinandergespreizt und dadurch getrennt wird, so dass letztlich mehrere einzelne Tragriemen 20 in der Aufzugsanlage in Gebrauch sind.

Zur einfacheren Handhabung bei Transport und Montage können mehrere Tragriemen 20 mit einem Trägerband bzw. Montageband, zum Beispiel aus Kunststoff oder dergleichen, miteinander verbunden werden. Das Trägerband bzw. Montageband wird vorzugsweise nach der Montage der Tragriemen 20 in einer Aufzugsanlage von den Tragriemen entfernt. Dieses Verfahren ist zum Beispiel in der noch nicht veröffentlichten EP 06118824.9 der Anmelderin ausführlich erläutert, auf welche deshalb diesbezüglich vollinhaltlich Bezug genommen wird.

### 4.4 Endbefestigungsmittel (zur Befestigung der freien Enden des Tragmittels)

Zum sicheren Befestigen der freien Enden 28a, 28b der seil- oder riemenartigen Tragmittel 20 sind unterschiedliche Endbefestigungsmittel vorsehbar. Die freien Enden von Drahtseilen können zum Beispiel durch Keilschlösser, Vergiessen, Verspleissen oder andere Verfahren fixiert werden; jene von Tragriemen werden üblicherweise durch Keilschlösser befestigt, wobei die mit den gerippten Seiten der Tragriemen zusammenwirkenden Komponenten der Keilschlösser vorzugsweise mit korrespondierenden Rillen versehen sind.

## Patentansprüche

1. Verfahren zur Herstellung eines riemenartigen Tragmittels (20) für eine Aufzugsanlage, mit den Schritten:
- Platzieren wenigstens eines seilartigen Zugträgers (42);
- Einbetten des wenigstens einen seilartigen Zugträgers (42) in eine erste Riemenlage (46) aus einem ersten plastifizierbaren Werkstoff derart, dass ein Teilriemen (66) mit einer ersten Aussenfläche (50) und einer eine Verbindungsebene (52) bildenden Fläche entsteht, bei dem der wenigstens eine Zugträger (42) teilweise aus der Verbindungsebene (52) des Teilriemens vorsteht und der vorstehende Abschnitt des wenigstens einen Zugträgers (42) zumindest teilweise mit dem ersten plastifizierbaren Werkstoff bedeckt ist; und
- Anformen einer zweiten Riemenlage (48) aus einem zweiten plastifizierbaren Werkstoff an der Verbindungsebene (52) des Teilriemens (66) und den vorstehenden Abschnitten des wenigstens einen Zugträgers (42) derart, dass ein Tragmittel (20) mit der ersten Aussenfläche (50) auf der Seite der ersten Riemenlage (46) und einer zweiten Aussenfläche (54) auf der Seite der zweiten Riemenlage (48) entsteht.

2. Verfahren nach Anspruch 1, bei welchem die Oberfläche des wenigstens einen Zugträgers (42) im Einbettungsschritt zu wenigstens 80%, vorzugsweise wenigstens 90%, besonders bevorzugt wenigstens 95% mit dem ersten plastifizierbaren Werkstoff bedeckt wird.

3. Verfahren nach Anspruch 1 oder 2, bei welchem die Freiräume innerhalb des wenigstens einen Zugträgers (42) im Einbettungsschritt zumindest teilweise mit dem ersten plastifizierbaren Werkstoff gefüllt werden.

4. Verfahren nach einem der Ansprüche 1 bis 3, bei welchem für die erste Riemenlage (46) und die zweite Riemenlage (48) ein gleicher Werkstoff oder ein gleicher Werkstoff mit unterschiedlichen Eigenschaften oder unterschiedliche Werkstoffe eingesetzt werden.

5. Verfahren nach einem der Ansprüche 1 bis 4, bei welchem die die Verbindungsebene (52) bildende Fläche des Teilriemens vor dem Anformungsschritt der zweiten Riemenlage (48) und / oder während des Einbettungsschritts wenigstens teilweise mit einer Oberflächenstruktur (70) versehen wird.

6. Verfahren nach einem der Ansprüche 1 bis 5, bei welchem die erste Aussenfläche (50) und/oder die zweite Aussenfläche (54) mit wenigstens einer sich in Längsrichtung des Tragmittels erstreckenden Rippe (80, 82) ausgebildet werden.

7. Vorrichtung zur Herstellung eines riemenartigen Tragmittels (20) für eine Aufzugsanlage, mit
einer ersten Fertigungsstation zum Bilden eines Teilriemens (66) mit einer ersten Aussenfläche (50) und einer eine Verbindungsebene (52) bildenden Fläche, wobei die erste Fertigungsstation ein erstes Formrad (56), eine erste Führung (58), die einen Teilumfang des ersten Formrades (56) umschlingt, eine Einrichtung (62) zum Zuführen wenigstens eines seilartigen Zugträgers (42) zum ersten Formrad (56) und einen ersten Extruder (64) zum Zuführen eines ersten plastifizierbaren Werkstoffs in einen zwischen dem ersten Formrad (56) und der ersten Führung (58) gebildeten Formhohlraum aufweist; und
einer zweiten Fertigungsstation zum Bilden des Tragriemens (20) mit der ersten Aussenfläche (50) und einer zweiten Aussenfläche (54), wobei die zweite Fertigungsstation ein zweites Formrad (72), eine zweite Führung (74), die einen Teilumfang des zweiten Formrades (72) umschlingt, eine Einrichtung zum Zuführen des in der ersten Fertigungsstation hergestellten Teilriemens (66) zum zweiten Formrad (72) und einen zweiten Extruder (76) zum Zuführen eines zweiten plastifizierbaren Werkstoffs in einen zwischen dem zweiten Formrad (72) und der zweiten Führung (74) gebildeten Formhohlraum aufweist,
**dadurch gekennzeichnet,**
**dass** die Umfangsfläche des ersten Formrades (56) der ersten Fertigungsstation mit wenigstens einer sich in Umfangsrichtung des ersten Formrades erstreckenden Längsnut (60) ausgebildet ist, in welcher der wenigstens eine zuführbare Zugträger (42) führbar ist und deren Breite (b) kleiner gewählt ist als ein Durchmesser (d) des für das erste Formrad (56) vorgesehenen Zugträgers (42) so dass bei dem in der ersten Fertigungsstation hergestellten Teilriemen (66) der wenigstens eine Zugträger (42) teilweise aus der Verbindungsebene (52) vorsteht und der vorstehende Abschnitt des wenigstens einen Zugträger (42) zumindest teilweise mit dem ersten plastifizierbaren Werkstoff bedeckt wird.

8. Vorrichtung nach Anspruch 7, bei welcher die Breite (b) der Längsnuten (60) der Umfangsfläche des ersten Formrades (56) in einem Bereich von etwa 70% bis 95%, besonders bevorzugt in einem Bereich von etwa 75% bis 90% des Durchmessers (d) der Zugträger (42) liegt.

9. Vorrichtung nach einem der Ansprüche 7 oder 8, bei welcher eine Tiefe (t) der Längsnuten (60) der Umfangsfläche des ersten Formrades (56) in einem Bereich von etwa 25% bis 50%, besonders bevorzugt in einem Bereich von etwa 30% bis 40% eines Durchmessers (d) der Zugträger (42) liegt.

10. Vorrichtung nach einem der Ansprüche 7 bis 9, bei welcher das erste Formrad (56) an seiner Umfangsfläche im Bereich zwischen den Längsnuten (60) mit einer Struktur versehen ist, um der die Verbindungsebene (52) bildenden Fläche des Teilriemens (66) eine Oberflächenstruktur (70) zu geben.

11. Tragriemen (20) für eine Aufzugsanlage, mit
einer ersten Riemenlage (46) aus einem ersten plastifizierbaren Werkstoff mit einer ersten Aussenfläche (50) und einer eine Verbindungsebene (52) bildenden Fläche; wenigstens einem seilartigen Zugträger (42), der so in die erste Riemenlage (46) eingebettet ist, dass er teilweise aus der Verbindungsebene (52) der ersten Riemenlage (46) vorsteht und der vorstehende Abschnitt des wenigstens einen Zugträgers (42) zumindest teilweise mit dem ersten plastifizierbaren Werkstoff bedeckt ist; und
einer zweiten Riemenlage (48) aus einem zweiten, anderen plastifizierbaren Werkstoff, der an der Verbindungsebene (52) der ersten Riemenlage (46) und an dem zumindest teilweise mit dem ersten plastifizierbaren Werkstoff bedeckten vorstehenden Abschnitten des wenigstens einen Zugträgers (42) angeformt ist und eine zweite Aussenfläche (54) des Tragriemens (20) bildet.

12. Tragriemen nach Anspruch 11, bei welchem die Oberfläche des wenigstens einen Zugträgers (42) zu wenigstens 80%, vorzugsweise wenigstens 90%, besonders bevorzugt wenigstens 95% mit dem ersten plastifizierbaren Werkstoff bedeckt ist.

13. Tragriemen nach Anspruch 11 oder 12, bei welchem die Freiräume innerhalb des wenigstens einen Zugträgers (42) zumindest teilweise mit dem ersten plastifizierbaren Werkstoff gefüllt sind.

14. Tragriemen nach einem der Ansprüche 11 bis 13, bei welchem die erste Riemenlage (46) und die zweite Riemenlage (48) aus einem gleichen Werkstoff oder aus einem gleichen Werkstoff mit unterschiedlichen Eigenschaften oder aus unterschiedlichen Werkstoffen gebildet sind.

15. Tragriemen nach einem der Ansprüche 11 bis 14, bei welchem die erste Aussenfläche (50) der ersten Riemenlage (46) mit wenigstens einer sich in Längsrichtung des Tragmittels (20) erstreckenden Rippe (80) ausgebildet ist.

16. Tragriemen nach einem der Ansprüche 11 bis 15, bei welchem das Verhältnis der Gesamthöhe des Tragriemens zur Gesamtbreite des Tragriemens (20) grösser als 1 ist.

17. Aufzugsanlage, mit
wenigstens einer Aufzugskabine (10) oder Plattform zum Befördern von Personen und/oder Gütern;
einem Antriebssystem mit wenigstens einer Antriebsmaschine (14) zum Bewegen der wenigstens einen Aufzugskabine (10) oder Plattform entlang einer Fahrbahn; und
wenigstens einem Tragmittel (20) zum Tragen der wenigstens einen Aufzugskabine (10) oder Plattform und Übertragen der Kräfte von der wenigstens einen Antriebsmaschine (14) auf die wenigstens eine Aufzugskabine (10) oder Plattform, wobei das wenigstens eine Tragmittel (20) ein riemenartiges Tragmittel nach einem der Ansprüche 11 bis 16 ist.

## Claims

1. Method of producing a belt-like supporting means (20) for a lift installation, having the following steps:
- placing in position at least one cable-like tension member (42);
- embedding the at least one cable-like tension member (42) in a first belt layer (46) made of a first plastifiable material so as to produce a sub-belt (66) with a first outer surface (50) and a surface which forms a connecting plane (52), in the case of which the at least one tension member (42) projects, in part, out of the connecting plane (52) of the sub-belt, and the projecting portion of the at least one tension member (42) is covered, at least in part, by the first plastifiable material; and
- integrally forming a second belt layer (48), made of a second plastifiable material, on the connecting plane (52) of the sub-belt (66) and on the projecting portions of the at least one tension member (42) so as to produce a supporting means (20) with the first outer surface (50) on the side of the first belt layer (46) and a second outer surface (54) on the side of the second belt layer (48).

2. Method according to Claim 1, in the case of which, in the embedding step, the surface of the at least one tension member (42) is covered by the first plastifiable material to an extent of at least 80%, preferably at least 90%, particularly preferably at least 95%.

3. Method according to Claim 1 or 2, in the case of which, in the embedding step, the free spaces within the at least one tension member (42) are filled, at least in part, with the first plastifiable material.

4. Method according to one of Claims 1 to 3, in the case of which a similar material, or a similar material with different properties, or different materials, is/are used for the first belt layer (46) and the second belt layer (48).

5. Method according to one of Claims 1 to 4, in the case of which that surface of the sub-belt which forms the connecting plane (52) is provided, at least in part, with a surface structure (70) prior to the step of the second belt layer (48) being integrally formed thereon and/or during the embedding step.

6. Method according to one of Claims 1 to 5, in the case of which the first outer surface (50) and/or the second outer surface (54) are/is designed with at least one rib (80, 82), which extends in the longitudinal direction of the supporting means.

7. Apparatus for producing a belt-like supporting means (20) for a lift installation, having
a first production station, for forming a sub-belt (66) with a first outer surface (50) and a surface which forms a connecting plane (52), the first production station having a first moulding wheel (56), having a first guide (58), which wraps around part of the circumference of the first moulding wheel (56), having a device (62) for feeding at least one cable-like tension member (42) to the first moulding wheel (56), and having a first extruder (64), for feeding a first plastifiable material into a mould cavity formed between the first moulding wheel (56) and the first guide (58); and
a second production station, for forming the supporting belt (20) with the first outer surface (50) and a second outer surface (54), the second production station having a second moulding wheel (72), having a second guide (74), which wraps around part of the circumference of the second moulding wheel (72), having a device for feeding the sub-belt (66), which is produced in the first production station, to the second moulding wheel (72), and having a second extruder (76), for feeding a second plastifiable material into a mould cavity formed between the second moulding wheel (72) and the second guide (74),
**characterized**
**in that** the circumferential surface of the first moulding wheel (56) of the first production station is designed with at least one longitudinal groove (60), which extends in the circumferential direction of the first moulding wheel, in which the at least one feedable tension member (42) can be guided and of which the width (b) is selected to be smaller than a diameter (d) of the tension member (42), which is provided for the first moulding wheel (56), and therefore, in the case of the sub-belt (66), which is produced in the first production station, the at least one tension member (42) projects, in part, out of the connecting plane (52), and the projecting portion of the at least one tension member (42) is covered, at least in part, by the first plastifiable material.

8. Apparatus according to Claim 7, in the case of which the width (b) of the longitudinal grooves (60) of the circumferential surface of the first moulding wheel (56) is located in a range of approximately 70% to 95%, particularly preferably in a range of approximately 75% to 90%, of the diameter (d) of the tension members (42).

9. Apparatus according to either of Claims 7 and 8, in the case of which a depth (t) of the longitudinal grooves (60) of the circumferential surface of the first moulding wheel (56) is located in a range of approximately 25% to 50%, particularly preferably in a range of approximately 30% to 40%, of a diameter (d) of the tension members (42).

10. Apparatus according to one of Claims 7 to 9, in the case of which the first moulding wheel (56) is provided with a structure on its circumferential surface, in the region between the longitudinal grooves (60), in order to give a surface structure (70) to that surface of the sub-belt (66) which forms the connecting plane (52).

11. Supporting belt (20) for a lift installation, having
a first belt layer (46), made of a first plastifiable material, with a first outer surface (50) and a surface which forms a connecting plane (52);
at least one cable-like tension member (42), which is embedded in the first belt layer (46) such that it projects, in part, out of the connecting plane (52) of the first belt layer (46), and the projecting portion of the at least one tension member (42) is covered, at least in part, by the first plastifiable material; and
a second belt layer (48), made of a second, different plastifiable material, which is integrally formed on the connecting plane (52) of the first belt layer (46) and on the projecting portions of the at least one tension member (42), these projecting portions being covered, at least in part, by the first plastifiable material, and forms a second outer surface (54) of the supporting belt (20).

12. Supporting belt according to Claim 11, in the case of which the surface of the at least one tension member (42) is covered by the first plastifiable material to an extent of at least 80%, preferably at least 90%, particularly preferably at least 95%.

13. Supporting belt according to Claim 11 or 12, in the case of which the free spaces within the at least one tension member (42) are filled, at least in part, with the first plastifiable material.

14. Supporting belt according to one of Claims 11 to 13, in the case of which the first belt layer (46) and the second belt layer (48) are formed from a similar material, or from a similar material with different properties, or from different materials.

15. Supporting belt according to one of Claims 11 to 14, in the case of which the first outer surface (50) of the first belt layer (46) is designed with at least one rib (80), which extends in the longitudinal direction of the supporting means (20).

16. Supporting belt according to one of Claims 11 to 15, in the case of which the ratio of the overall height of the supporting belt to the overall width of the supporting belt (20) is greater than 1.

17. Lift installation having
at least one lift car (10) or platform for conveying people and/or goods;
a drive system with at least one driving-power source (14) for moving the at least one lift car (10) or platform along a track; and
at least one supporting means (20) for supporting the at least one lift car (10) or platform and transmitting the forces from the at least one driving-power source (14) to the at least one lift car (10) or platform, wherein the at least one supporting means (20) is a belt-like supporting means according to one of Claims 11 to 16.

## Revendications

1. Procédé de fabrication d'un moyen de support en forme de courroie (20) pour une installation d'ascenseur, comprenant les étapes :
- placer au moins un tirant de type câble (42) ;
- incorporer l'au moins un tirant de type câble (42) dans une première couche de courroie (46) constituée d'un premier matériau plastifiable, de telle sorte qu'il en résulte une courroie partielle (66) dotée d'une première surface extérieure (50) et d'une surface formant un plan de liaison (52), dans laquelle courroie partielle l'au moins un tirant (42) fait saillie partiellement hors du plan de liaison (52) de la courroie partielle et la section saillante de l'au moins un tirant (42) est recouverte au moins partiellement par le premier matériau plastifiable ; et
- former une deuxième couche de courroie (48) constituée d'un deuxième matériau plastifiable au niveau du plan de liaison (52) de la courroie partielle (66) et des sections saillantes de l'au moins un tirant (42), de telle sorte qu'il en résulte un moyen de support (20) doté de la première surface extérieure (50) du côté de la première couche de courroie (46) et d'une deuxième surface extérieure (54) du côté de la deuxième couche de courroie (48).

2. Procédé selon la revendication 1, dans lequel la surface de l'au moins un tirant (42) est recouverte dans l'étape d'incorporation à au moins 80%, de préférence au moins 90%, de manière particulièrement préférée au moins 95%, par le premier matériau plastifiable.

3. Procédé selon la revendication 1 ou 2, dans lequel les espaces libres à l'intérieur de l'au moins un tirant (42) sont remplis au moins partiellement par le premier matériau plastifiable dans l'étape d'incorporation.

4. Procédé selon l'une quelconque des revendications 1 à 3, dans lequel un même matériau ou un même matériau présentant des propriétés différentes ou des matériaux différents sont utilisés pour la première couche de courroie (46) et la deuxième couche de courroie (48).

5. Procédé selon l'une quelconque des revendications 1 à 4, dans lequel la surface de la courroie partielle qui forme le plan de liaison (52) est pourvue au moins partiellement d'une structure de surface (70) avant l'étape de formation de la deuxième couche de courroie (48) et/ou pendant l'étape d'incorporation.

6. Procédé selon l'une quelconque des revendications 1 à 5, dans lequel la première surface extérieure (50) et/ou la deuxième surface extérieure (54) sont réalisées avec au moins une nervure (80, 82) s'étendant dans la direction longitudinale du moyen de support.

7. Dispositif de fabrication d'un moyen de support en forme de courroie (20) pour une installation d'ascenseur, comprenant
un premier poste de fabrication pour former une courroie partielle (66) dotée d'une première surface extérieure (50) et d'une surface formant un plan de liaison (52), le premier poste de fabrication comprenant une première roue de moulage (56), un premier guide (58) qui entoure une périphérie partielle de la première roue de moulage (56), un dispositif (62) pour acheminer au moins un tirant de type câble (42) jusqu'à la première roue de moulage (56) et une première extrudeuse (64) pour acheminer un premier matériau plastifiable dans une cavité de moulage formée entre la première roue de moulage (56) et le premier guide (58) ; et
un deuxième poste de fabrication pour former la courroie de support (20) dotée de la première surface extérieure (50) et d'une deuxième surface extérieure (54), le deuxième poste de fabrication comprenant une deuxième roue de moulage (72), un deuxième guide (74) qui entoure une périphérie partielle de la deuxième roue de moulage (72), un dispositif pour acheminer la courroie partielle (66) fabriquée dans le premier poste de fabrication jusqu'à la deuxième roue de moulage (72) et une deuxième extrudeuse (76) pour acheminer un deuxième matériau plastifiable dans une cavité de moulage formée entre la deuxième roue de moulage (72) et le deuxième guide (74),
**caractérisé en ce que**
la surface périphérique de la première roue de moulage (56) du premier poste de fabrication est réalisée avec au moins une rainure longitudinale (60) s'étendant dans la direction périphérique de la première roue de moulage, dans laquelle rainure longitudinale peut être guidé l'au moins un tirant (42) pouvant être acheminé, et la largeur (b) de cette rainure longitudinale est choisie plus petite qu'un diamètre (d) du tirant (42) prévu pour la première roue de moulage (56), de telle sorte que, dans la courroie partielle (66) fabriquée dans le premier poste de fabrication, l'au moins un tirant (42) fasse saillie partiellement hors du plan de liaison (52) et que la section saillante de l'au moins un tirant (42) soit recouverte au moins partiellement par le premier matériau plastifiable.

8. Dispositif selon la revendication 7, dans lequel la largeur (b) des rainures longitudinales (60) de la surface périphérique de la première roue de moulage (56) se situe dans une plage d'environ 70% à 95%, de manière particulièrement préférée dans une plage d'environ 75% à 90% du diamètre (d) des tirants (42).

9. Dispositif selon la revendication 7 ou 8, dans lequel une profondeur (t) des rainures longitudinales (60) de la surface périphérique de la première roue de moulage (56) se situe dans une plage d'environ 25% à 50%, de manière particulièrement préférée dans une plage d'environ 30% à 40%, d'un diamètre (d) des tirants (42).

10. Dispositif selon l'une quelconque des revendications 7 à 9, dans lequel la première roue de moulage (56) est pourvue d'une structure sur sa surface périphérique dans la région entre les rainures longitudinales (60), afin de doter la surface de la courroie partielle (66) qui forme le plan de liaison (52) d'une structure de surface (70).

11. Courroie de support (20) pour une installation d'ascenseur, comprenant
une première couche de courroie (46), constituée d'un premier matériau plastifiable, dotée d'une première surface extérieure (50) et d'une surface formant un plan de liaison (52) ;
au moins un tirant de type câble (42) qui est incorporé dans la première couche de courroie (46) de telle sorte qu'il fasse saillie partiellement hors du plan de liaison (52) de la première couche de courroie (46) et que la section saillante de l'au moins un tirant (42) soit recouverte au moins partiellement par le premier matériau plastifiable ; et
une deuxième couche de courroie (48), constituée d'un deuxième autre matériau plastifiable, qui est formée au niveau du plan de liaison (52) de la première couche de courroie (46) et au niveau des sections saillantes de l'au moins un tirant (42) recouvertes au moins partiellement par le premier matériau plastifiable, et qui forme une deuxième surface extérieure (54) de la courroie de support (20).

12. Courroie de support selon la revendication 11, dans laquelle la surface de l'au moins un tirant (42) est recouverte à au moins 80%, de préférence au moins 90%, de manière particulièrement préférée au moins 95%, par le premier matériau plastifiable.

13. Courroie de support selon la revendication 11 ou 12, dans laquelle les espaces libres à l'intérieur de l'au moins un tirant (42) sont remplis au moins partiellement par le premier matériau plastifiable.

14. Courroie de support selon l'une quelconque des revendications 11 à 13, dans laquelle la première couche de courroie (46) et la deuxième couche de courroie (48) sont formées à partir d'un même matériau ou d'un même matériau présentant des propriétés différentes ou de matériaux différents.

15. Courroie de support selon l'une quelconque des revendications 11 à 14, dans laquelle la première surface extérieure (50) de la première couche de courroie (46) est réalisée avec au moins une nervure (80) s'étendant dans la direction longitudinale du moyen de support (20).

16. Courroie de support selon l'une quelconque des revendications 11 à 15, dans lequel le rapport de la hauteur totale de la courroie de support à la largeur totale de la courroie de support (20) est supérieur à 1.

17. Installation d'ascenseur, comprenant
au moins une cabine d'ascenseur (10) ou plateforme pour transporter des personnes et/ou des marchandises ;
un système d'entraînement doté d'au moins une machine d'entraînement (14) pour déplacer l'au moins une cabine d'ascenseur (10) ou plateforme le long d'une voie de transport ; et
au moins un moyen de support (20) pour supporter l'au moins une cabine d'ascenseur (10) ou plateforme et transmettre les forces de l'au moins une machine d'entraînement (14) à l'au moins une cabine d'ascenseur (10) ou plateforme, l'au moins un moyen de support (20) étant un moyen de support en forme de courroie selon l'une quelconque des revendications 11 à 16.
